# EUROPEAN PATENT SPECIFICATION

(11) **EP 3 873 686 B1**
(45) Date of publication and mention of the grant of the patent: **22.10.2025**
(21) Application number: 19816469.1
(22) Date of filing: 31.10.2019
(51) Int. Cl.: B21D 43/00, B21F 23/00, B65G 47/14

(54) **METHOD AND APPARATUS FOR FEEDING ELONGATED ELEMENTS**
VERFAHREN UND VORRICHTUNG ZUR ZUFÜHRUNG VON LÄNGLICHEN ELEMENTEN
PROCÉDÉ ET APPAREIL D'ALIMENTATION D'ÉLÉMENTS ALLONGÉS

(30) Priority: 31.10.2018 IT 201800009995
(43) Date of publication of application: 08.09.2021
(73) Proprietor: Schnell S.p.A., 61036 Colli al Metauro (PU) (IT)
(72) Inventor: MIGLIORANZA, Aronne, 61036 Colli al Metauro (PU) (IT)
(74) Representative: Manzella & Associati
(86) International application number: PCT/IT2019/050233
(87) International publication number: WO 2020/089954

(56) References cited:
- EP-A1- 3 450 380
- EP-A2- 1 356 875
- EP-A2- 1 356 876
- CN-A- 103 043 429
- DE-A1- 3 900 201
- DE-C2- 3 900 201

## Description

### Technical Field

The present invention relates to a method and an apparatus for feeding elongated elements, in particular metal elements such as profiles and metal rods in bars for reinforced concrete, for example intended for a cutting, bending, welding or other processing cycle.

### Prior Art

Apparatuses are known for processing elongated metal elements, in particular metal profiles and similar products in bars, which require to feed these elements, for example to gather them in a desired number or to directly carry out cutting and/or bending operations on a part of the aforementioned elements.

Examples of such apparatuses are shown in the patents EP 1356875, on which the preamble of independent claims 1 and 14 is based, and EP 1356876 of the same Applicant.

These elements are generally stored and transported in bundles which, due to production requirements, can be of considerable length, from 12 to even 24 meters.

Since the metal elements, in particular those intended for reinforcing reinforced concrete, are considerably extended, so even though they are made of steel, they prove to be particularly flexible. This circumstance is the more accentuated when the ratio between the longitudinal extension of the elements and the respective transverse dimension is high. Because of this flexibility, these elements are easily intertwined when they are grouped into bundles, thus assuming a disordered configuration. Therefore it is difficult, for later use in small groups or individually, to untangle them.

In this regard it should also be noted that the elements used for reinforcing reinforced concrete, in addition to being heavy and therefore difficult to handle as such, are often provided with ribs on the external surfaces, to improve the adherence properties with the covering material, generally concrete. The presence of ribs, however, further hinders the mutual sliding between the elements to be untangled, therefore the untangling operations necessary before any processing.

Known solutions for untangling elongated elements, in particular metallic ones, are bulky, therefore expensive, and sometimes not very reliable in untangling very small transverse elements.

Such solutions provide, for example, apparatuses equipped with transport chains suitable for transversely supporting the elements to be manipulated. These chains are actuated according to an alternative motion, in particular a transversal oscillatory motion which moves the elements to be untangled. This oscillatory motion has the function of untying the most tangled elements, and then gradually place the group of treated elements on the same plane, so as to untangle them.

DE 3900201 illustrates and example of a machine for separating tubes piled in a hollow.

However, this solution, which is also complex, cumbersome and costly, does not fully satisfy the requirements of the specific field, resulting sometimes ineffective and barely accurate.

### Disclosure

The aim of the present invention is to solve the above problems, devising a method and an apparatus for feeding elongated elements, in particular metal profiles in bars for reinforced concrete.

Another object of the present invention is to provide an apparatus for feeding elements of elongated shape, of simple constructive and functional conception, provided with a safe and reliable use, as well as a relatively inexpensive cost.

The aforementioned objects are achieved, according to the present invention, by the method for feeding elongated elements according to claim 1 and by the apparatus for feeding the same elements according to claim 14.

The method according to the invention provides for arranging a plurality of elongated elements along a longitudinal direction, standing on a support plane, for actuating a gripping unit according to a collecting motion at the support plane, so as to lift at least a part of the same elements at a respective gripping portion, from the support plane.

The method provides, in particular, for placing near, in the aforementioned collecting motion, a respective operating portion of the gripping unit with a gripping portion of the elements to be collected, by acting on the gripping portion itself by means of magnetic attraction.

The method further provides for actuating in an inserting motion a transfer group comprising at least one support member arranged along the same longitudinal direction, so as to insert it below a respective portion spaced from the aforementioned gripping portion of the collected elements, and lift the spaced portion to support it in a support configuration. In particular, the aforesaid lifting allows the collected elements to be untangled, freeing them from the remaining elements on the support plane.

This untangling effect is further effective if the transfer unit comprises a plurality of support members, when actuating the same supporting members in succession, on opposite sides with respect to the gripping member.

Moreover, the aforementioned lifting allows the elongated elements to be fed between stations at different heights, thus compensating for any difference in height between adjacent stations of the processing plant.

The gripping unit is then operated in a disengagement motion, to disengage the collected elements, leaving the same collected elements standing on the transfer group. In this configuration the aforesaid support member defines a substantially horizontal transfer plane.

The method further provides for positioning the gripping unit in an inactive position spaced from the transfer unit, so as to free the transfer plane for the subsequent transfer operations of the picked elements.

The aforesaid inactive position is advantageously arranged in a retractable way below the lower part of the transfer plane.

In particular, thanks to the provision, for the gripping unit, of an inactive position spaced from the transfer unit, which therefore frees a respective transfer area, the method according to the invention allows the elongated elements to be fed between adjacent operating stations of a processing plant.

Finally, the transfer unit is actuated in a transfer motion, so as to cause the collected elements to roll or to slide or to be displaced without rolling or sliding in a transverse transfer direction, opposite to the support plane, towards a transfer station adjacent to the support plane itself.

By displacing without rolling or sliding is intended that no relative motion takes place between the support member and the elements during the aforementioned transfer motion, so that the elements themselves are kept in an ordered configuration.

This transfer motion without rolling or sliding may preferably take place by translation.

The gripping unit is advantageously interposed, preferably in a fixed manner, between the support plane and the transfer station, so that during the transfer motion the collected elements go over the gripping unit positioned in the inactive position.

Preferably, the step of actuating the gripping unit in the gripping motion provides that the gripping member acts on the gripping portion from a position arranged above it.

Preferably the method provides for actuating the at least one support member between the support configuration, drawn towards the aforementioned support plane and a transfer configuration, retracted towards the transfer station, so as to cause the movement without rolling or sliding of the collected elements towards the transfer station.

Preferably, alternatively, the aforesaid transfer motion takes place by tilting the aforementioned at least one support member of the transfer unit, so as to convey the elements standing on the transfer plane by rolling or sliding along the aforementioned transverse transfer direction.

According to a different aspect of the invention, the gripping unit may be actuated in the aforementioned inactive spaced position, along the aforementioned longitudinal direction, so as to free the operating space for transferring the collected bars.

The gripping unit of the corresponding apparatus is magnetic, for example a permanent magnet or an electromagnet, or other equivalent member.

Preferably the working portion of the gripping unit acts on the gripping portion from a position arranged above it. Substantially the aforementioned gripping portion is preferably a portion of the respective collected elements, facing upwards.

The method may advantageously provide for carrying out the aforementioned disengagement motion, orienting the same gripping unit so as to arrange the respective operating portion according to a plane transverse to the transfer plane and to actuate a relative sliding between the operative portion and the gripping portion of the collected elements, placed in abutment against an abutment structure associated with the gripping unit itself. In particular, in the initial disengagement step, the aforesaid orientation motion of the operating portion draws with it the gripping portion of the elements engaged by the gripping unit.

Advantageously, this relative sliding may further serve to shift the gripping unit into the aforementioned inactive position. Therefore with the same disengagement motion, for example of translation of the gripping unit, the function of freeing the transfer area for the complete operability of the transfer unit may also be performed.

According to a particular aspect, the method may provide that, in order to carry out the aforementioned collecting motion and/or the aforementioned disengagement motion, the gripping member is operated according to an orientation movement to orient the respective operating portion between a configuration substantially parallel to the support plane so as to interact with the elements to be collected or to be disengaged, and a configuration spaced from the aforementioned elements.

The method may provide, for example, for initially arranging the elements to be fed against an abutmentbarrier arranged along a longitudinal edge of the support plane. The transfer plan is therefore greater than the aforementioned abutment barrier if provided, to allow the passage of the elements collected from the transfer station by rolling or sliding, or by moving without rolling or sliding.

Preferably, the aforesaid insertion motion of the transfer unit takes place by rotating at least one support member around a transverse axis, in particular orthogonal, to the support plane. Alternatively, the insertion motion may take place by translation, for example by actuating the at least one support member between a retracted configuration transversely to the support plane and an extracted configuration transversely towards the same plane.

Preferably the insertion motion further comprises a translational motion, according to a substantially vertical direction, or a rotational motion, around a substantially horizontal axis, to lift the spaced portion of the elements, when the support member is inserted below it.

Advantageously, the gripping unit may collect the elements at a central gripping portion.

In this case, in particular, it is advantageous to provide for the aforementioned inserting motion to actuate in succession a plurality of pairs of support members, forming part of the transfer unit, the support members of each pair being opposed by each part of the gripping unit arranged centrally.

According to a particular aspect of the invention, before the aforementioned disengagement motion of the gripping unit, it is possible to count and separate a certain number of elements, separating it from an excess number by means of a counting and separating unit associated with the gripping unit.

The method and, correspondingly, the apparatus that actuates it according to the invention, therefore allow the feeding of elongated elements to be made in a very easy manner, by means of very compact operating groups, preferably associated in a fixed manner with adjacent work stations.

In particular, unlike the known solutions, the method and the apparatus according to the invention can avoid the use of expensive and bulky, and therefore slow, movable bridge structures, to carry the same elements.

The method and the apparatus according to the invention therefore enable the operations of feeding the elements required by the downstream operating stations to be carried out very quickly.

### Description of drawings

The details of the invention will become more evident from the detailed description of a preferred embodiment of the apparatus for feeding elongated elements, as well as of the method implemented by the same apparatus, illustrated only by way of non-limitative example in the accompanying drawings, where:
Figures 1 to 16 respectively show a perspective view of the apparatus for feeding elongated elements according to the invention, in successive steps;
Figures 2a, 3a, 4a, 5a, 6a, 7a, 8a, 9a, 9b, 10a, 10b, 11a, 11b, 12a, 12b, 13a, 14a, 15a respectively show enlarged perspective views of portions of the same apparatus relating to the figures of the same number;
Figures 17 to 22 respectively show a perspective view of a further embodiment of the apparatus according to the invention, in successive operating steps;
Figures 17a, 17b, 18a, 18b, 19a, 19b, 20a, 20b, 21a, 21b, 22a, 22b respectively show a perspective view and a side view of a detail of the same further embodiment of the apparatus, relative to what is illustrated in figures of the same number;
Figures 23 to 32 respectively show a perspective view of a third embodiment of the apparatus according to the invention, in successive steps;
Figures 24a, 25a, 26a, 27a, 27b, 28a, 28b, 29a, 29b, 30a, 31a respectively show a perspective view and a side view of the respective details of the same third embodiment of the apparatus, relative to what is illustrated in the figures of the same number.

### Best mode

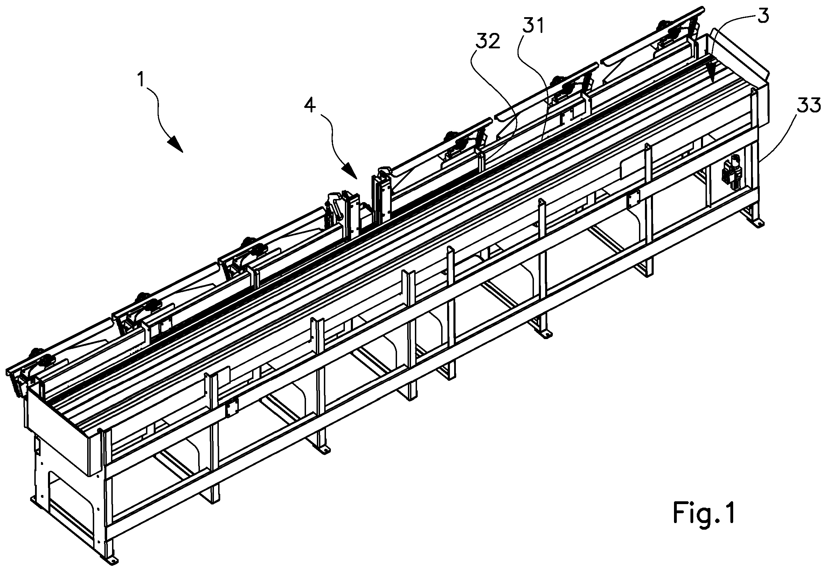

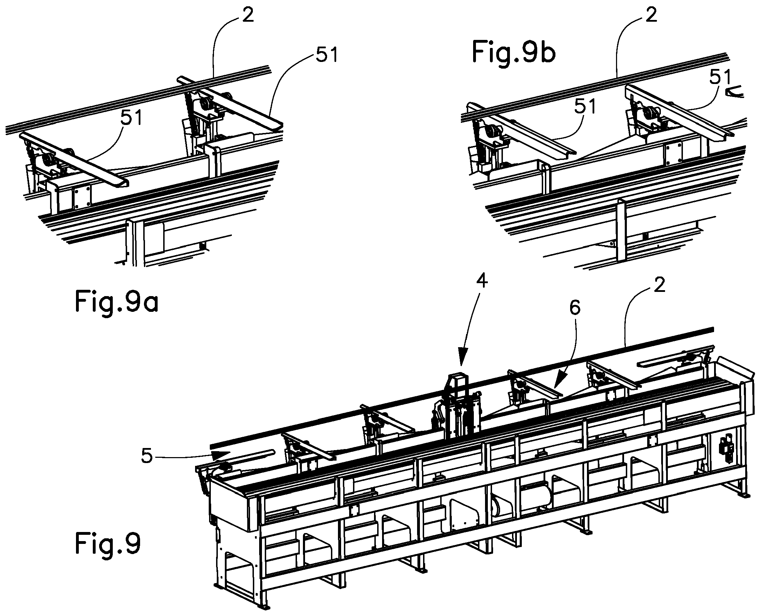

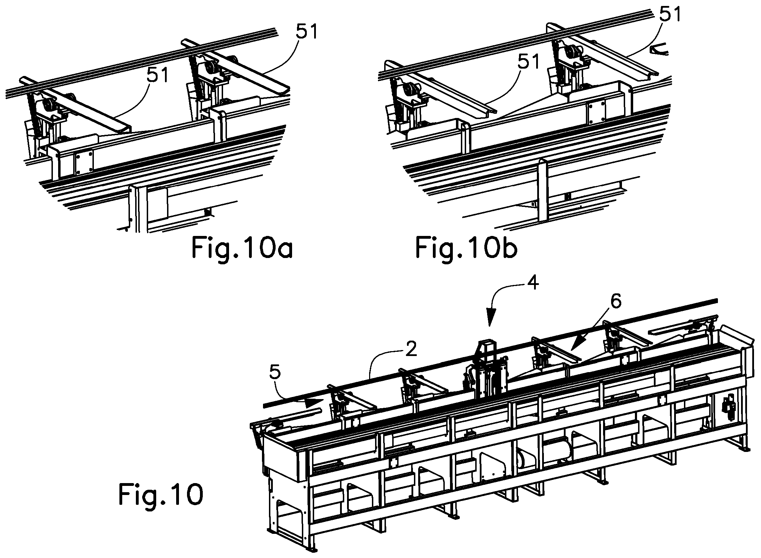

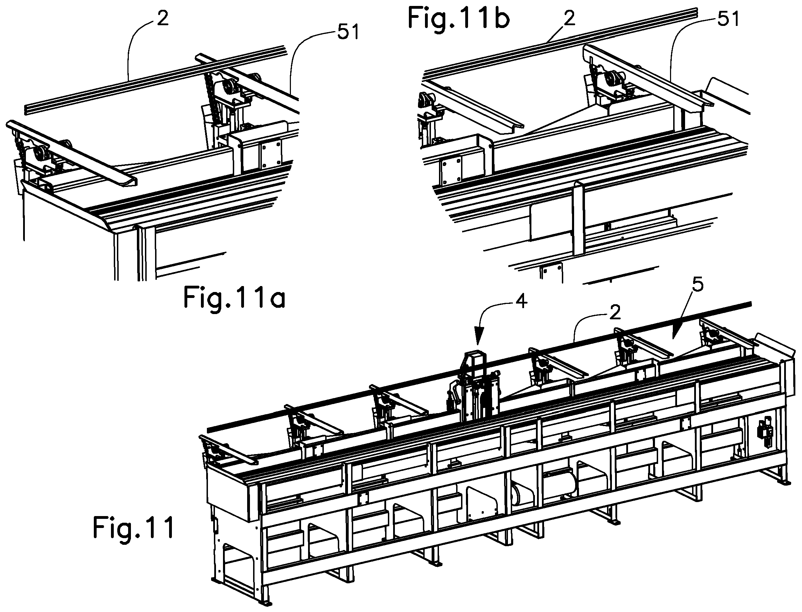

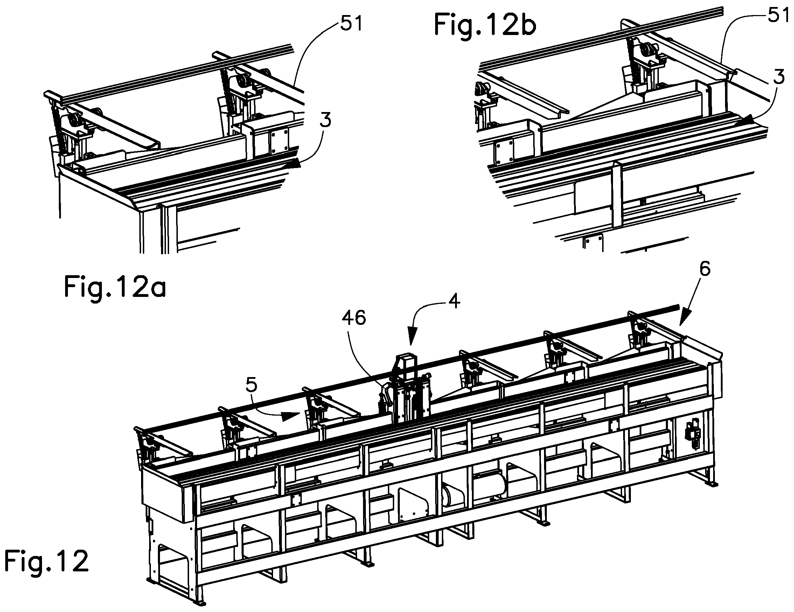

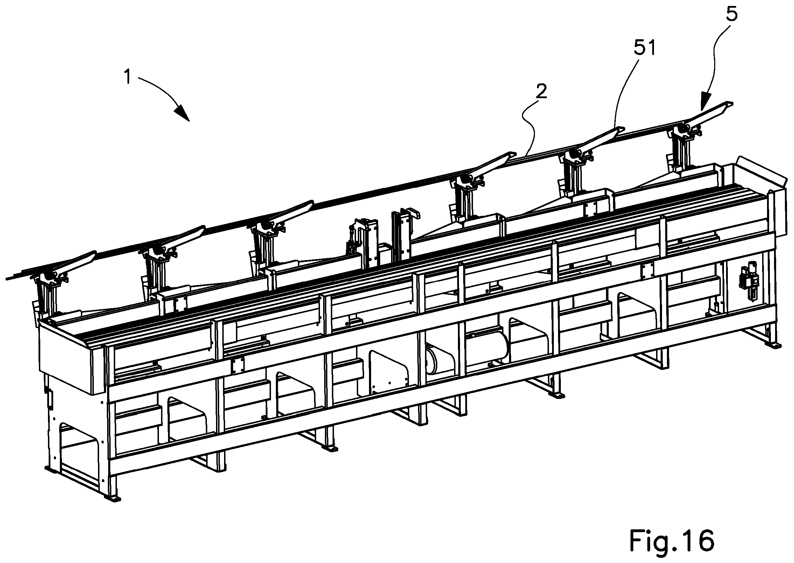

With particular reference to Figures 1 to 16, the reference numeral 1 generally indicates an apparatus for feeding elongated elements 2, in particular metal profiles and rods.

The apparatus 1 comprises a support plane 3 on which the elements 2 may be arranged, preferably resting in a random manner, therefore also in a disorderly manner, along a longitudinal direction. In fact, the elements 2, which come for example from a grouping in bundles, may be fed in various ways on the support plane 3, for example by lifting from other stations or by longitudinal or transverse transferring, and can therefore assume on the support plane 3 a disordered configuration, for example partially intertwined. The degree of interweaving of the elements 2 can be directly proportional to the flexibility of the elements 2 themselves, therefore for example to the respective length or, more precisely, to the ratio between the length and the diameter or the transverse dimension of the same elements 2.

Moreover the difficulty of untangling can be influenced, for example, by the presence, on the external surface of the elements 2, of ribs or other conformations, which make difficult the mutual sliding, therefore the separation from the rest of the bundle of the elements 2 to be fed.

The elements 2 can therefore be arranged on the support plane 3 in a disordered condition, in particular intertwined or tangled, therefore difficult to handle for carrying out the subsequent operations.

The support plane 3 is preferably tilted with respect to a horizontal plane, and delimited, at a longitudinal edge 31, by an abutment barrier 32 preferably oriented, but without limitation, substantially vertically.

The support plane 3 and the abutment barrier 32, if provided, are carried by a frame 33.

The apparatus 1 also comprises a gripping unit 4 and a transfer unit 5, cooperating with the aforementioned gripping unit 4, to separate at least a part of the elements 2 arranged on the support plane 3 and feed it to a machine, in general to a transfer station, opposite to the support plane 3 with respect to the transfer unit 5.

The gripping unit 4 is preferably arranged in a central position with respect to the longitudinal development of the support plane 3. However, different arrangements of the gripping unit 4, for example at one end or on a different side of the support plane 3, are possible.

The gripping unit 4 and the transfer unit 5 are preferably arranged along the aforementioned longitudinal direction, at the aforementioned longitudinal edge 31 of the support plane 3.

The gripping unit 4 preferably comprises a gripping member 41 which may be actuated according to a collecting motion to collect at least a part of the elements 2 arranged resting on the support plane 3 at a respective gripping portion 2a, for example central with respect to the longitudinal development of the elements 2 themselves. Alternatively, the gripping portion 2a can also be a distal or end portion.

In particular, the aforementioned collecting motion of the gripping unit 4 may provide for a lifting motion, to lift the aforementioned gripping portion 2a of the elements 2 collected from the support plane 3. In particular, the lifting made by the gripping unit 4 is such that it raises the gripping portion 2a of the elements 2 beyond the aforementioned abutment barrier 32, if provided, to subsequently allow the elements 2 to be transferred, as described below.

The gripping unit 4, in particular the gripping member 41, is a magnetic one, for example made by means of a preferably permanent magnet, or an electromagnet. Alternatively, the gripping member 41 may be made by an equivalent gripping member.

The gripping member 41 is preferably carried by the framework 33 and may be actuated according to the aforesaid collecting motion preferably at the longitudinal edge 31 of the support plane 3. In fact, since the support plane 3 is preferably tilted towards this edge 31, the elements 2 tend to be arranged at the same edge 31, so as to maximise the collecting efficiency operated by the gripping member 41.

More precisely, the aforementioned collecting motion provides for placing close a respective operative portion 42 of the gripping member 41, preferably, but not exclusively provided with a flat surface, to the aforementioned gripping portion 2a of the elements 2 to be collected. This collecting motion may therefore take place, for example and without limitation, by means of a translational motion. Alternatively, this gripping motion may take place by means of a suitable combination of a translational motion with a rotary motion.

Preferably the operative portion 42 of the gripping member 41 acts on the gripping portion 2a from a position arranged above it. Substantially the aforementioned gripping portion 2a is preferably a portion of the respective elements, facing upwards.

In order to enable a collecting action, in particular through magnetic attraction, the operative portion 42 of the gripping member 41 may also preferably be operable according to an orientation movement, through which it is oriented according to a preferably parallel or in any case oriented in a suitable way plane to the support plane 3, to interact with the elements 2 to be collected effectively.

For this purpose, the gripping member 41 is preferably mounted on a slide 43 slidable on guide means 44 and operable according to the aforesaid collecting motion by actuation means 45 associated therewith. In particular, the same gripping member 41 may be articulated to the slide 43 to enable the orientation movement mentioned above.

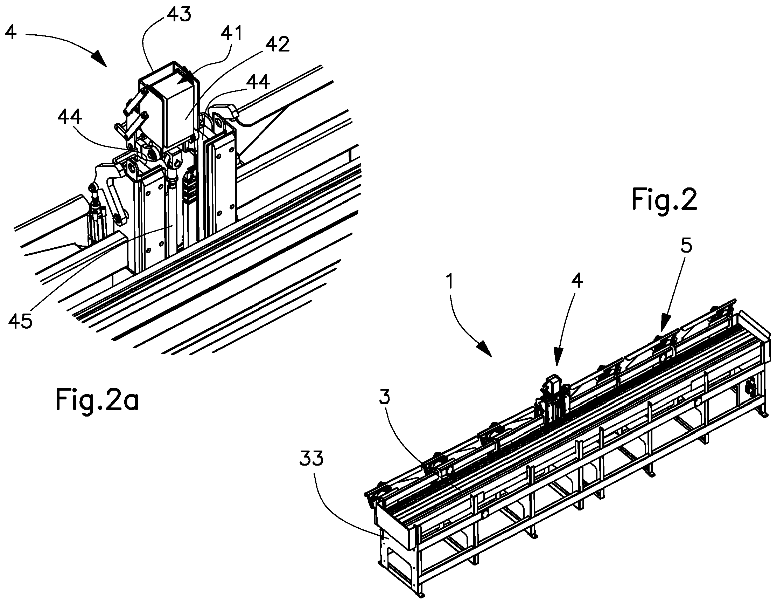

According to the aforesaid collecting motion, the gripping member 41 is alternately movable between an inactive position, preferably but not limitedly lowered with respect to the support plane 3, and an active position, raised with respect to the same plane, beyond the abutment barrier 32, if provided (see Figures 1, 2 and 2a).

Moreover, according to the aforementioned orientation motion, the gripping member 41 may preferably be oriented alternatively between a configuration spaced from the elements 2 to be collected, with the operating portion 42 preferably oriented in a substantially tilted manner, in particular orthogonal with respect to the support plane 3 on which the elements 2 to be collected are arranged, and an oriented configuration, with the operative portion 42 substantially parallel to the aforesaid plane 3.

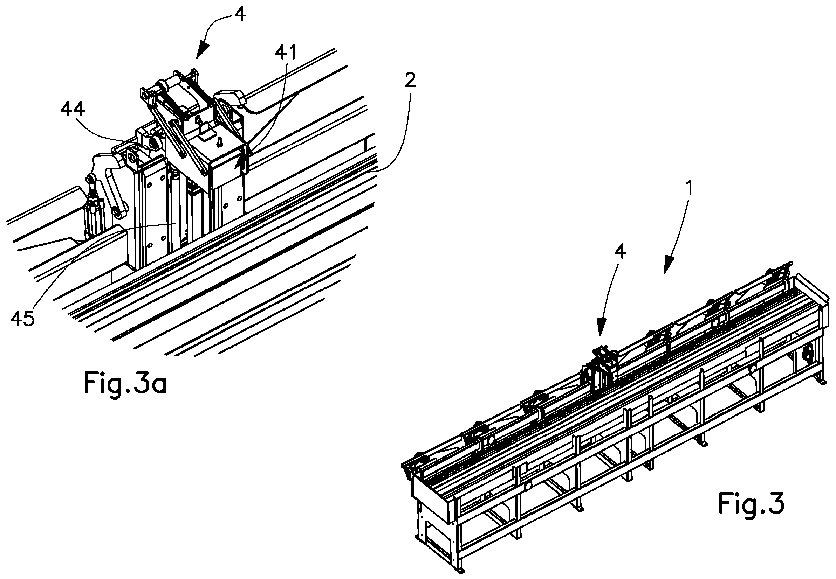

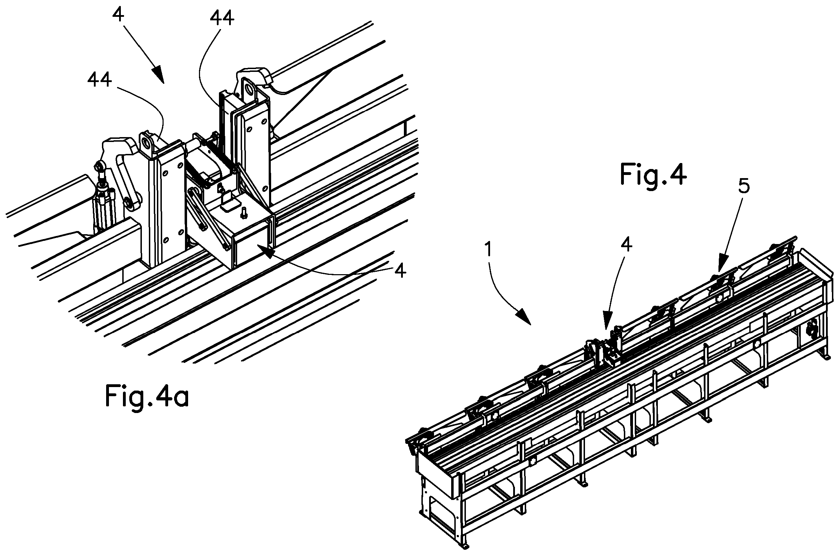

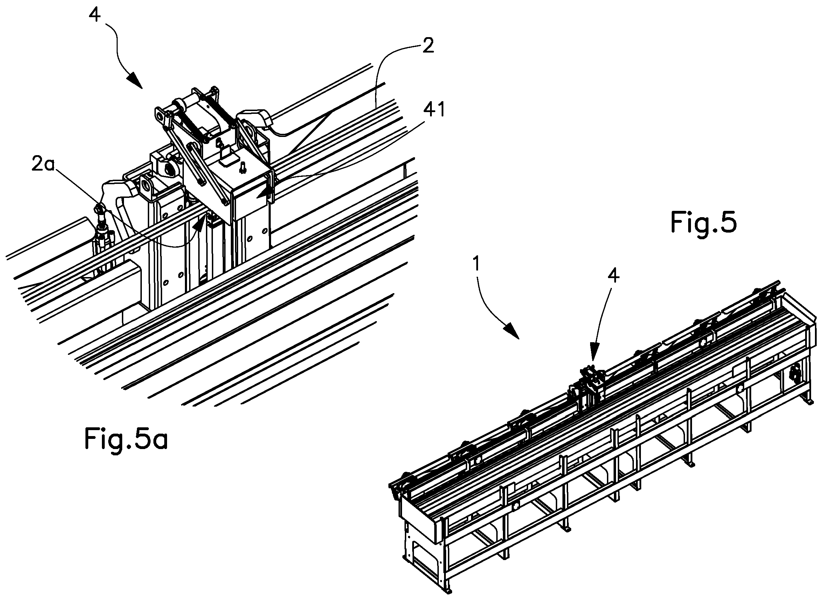

More precisely, according to the aforementioned collecting motion, the gripping member 41 may be guided along the guide means 44, initially for example to emerge from the support plane 3, then to be brought closer to the operative portion 42 for example in the configuration oriented to the level of the support plane 3, to interact with the elements 2 to be collected (see Figures 3, 3a, 4 and 4a), and finally to be raised with respect to the support plane 3, beyond the abutment barrier 32 if provided, preferably maintaining the same oriented configuration (see Figures 5, 5a) and thus bearing the elements 2 collected at the respective gripping portion 2a.

The gripping unit 4 is also movable with a disengagement motion, to disengage the collected elements 2, leaving them loaded, as better described below, onto the transfer unit 5.

The gripping unit 4 preferably comprises a abutment structure 46, for example made from a pair of abutment elements, preferably arranged laterally to the aforesaid guide means 44, in order to allow the disengagement of the elements 2 from the gripping member 41. The abutment structure 46 may be made by means of fixed or mobile elements with respect to the guide means 44.

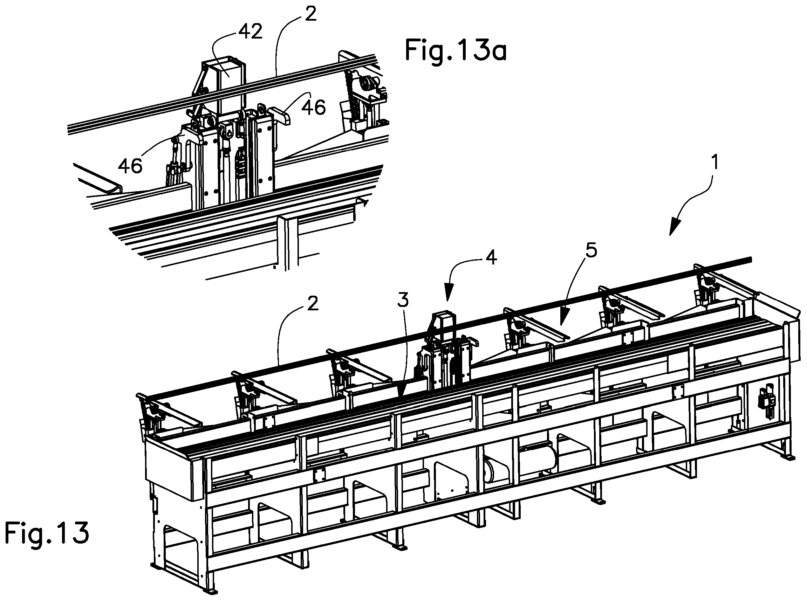

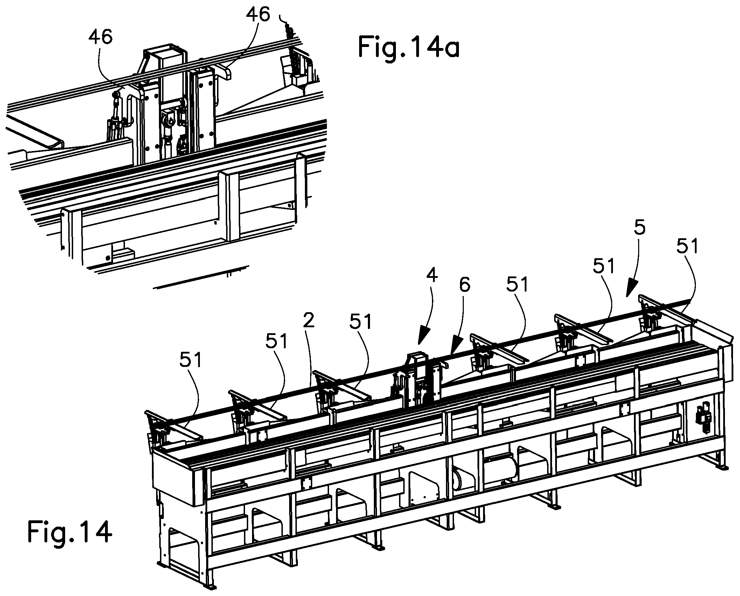

More precisely, preferably in the case of collecting through permanent magnetic attraction, the aforementioned disengagement motion can take place by combining the aforementioned collecting motion, in a respective return stroke, with the orientation motion mentioned above. In practice, the disengagement motion may provide for arranging the gripping member 41 raised following the aforementioned lifting motion in the aforementioned spaced configuration, preferably with the operating portion 42 substantially disposed tilted, in particular orthogonally to the support plane 3, carrying correspondingly the collected elements 2. The disengagement may then take place by actuating the same gripping member 41 in a return stroke, from the raised position, thus bringing the collected elements 2 in abutment against the abutment structure 46. More precisely, following the aforementioned return stroke, the elements 2 are blocked by the abutment structure 46, thus causing a relative tangential sliding between the operative portion 42 of the gripping member 41 and the elements 2 themselves. This relative sliding easily allows the gradual separation of the collected elements 2, since the force required for separation, in particular in the case of magnetic action of the gripping member 41, is minimal in a tangential direction (see in particular Figures 13, 13a, 14 and 14a).

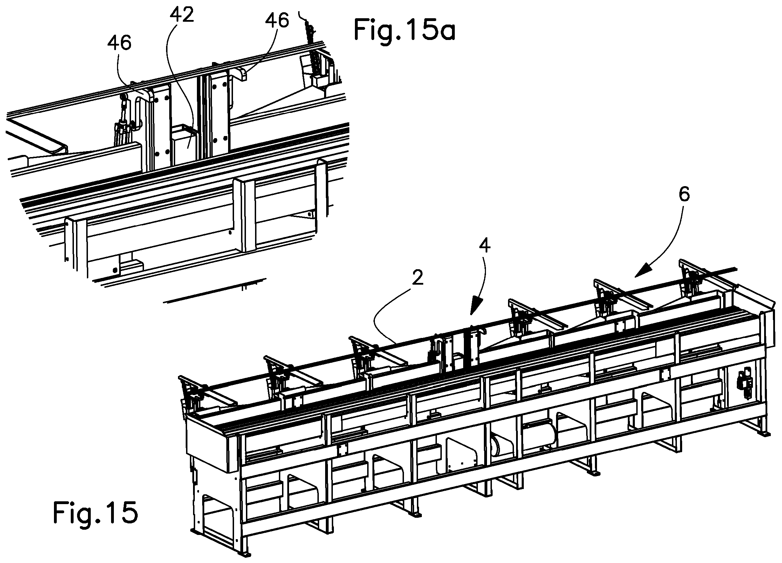

To complete the disengagement stroke, the gripping member 41 may be placed again into inactive position, retractably to the support plane 3 (see Figures 14, 14a, 15, 15a).

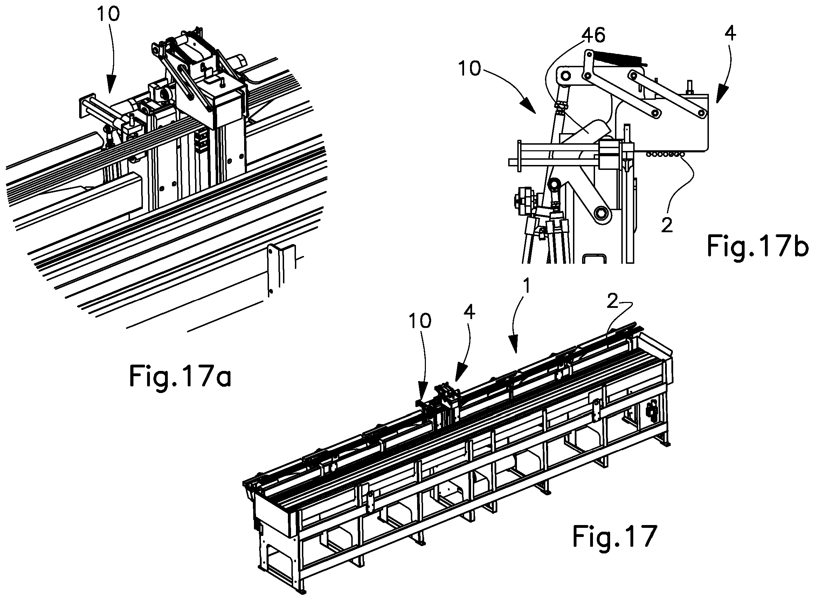

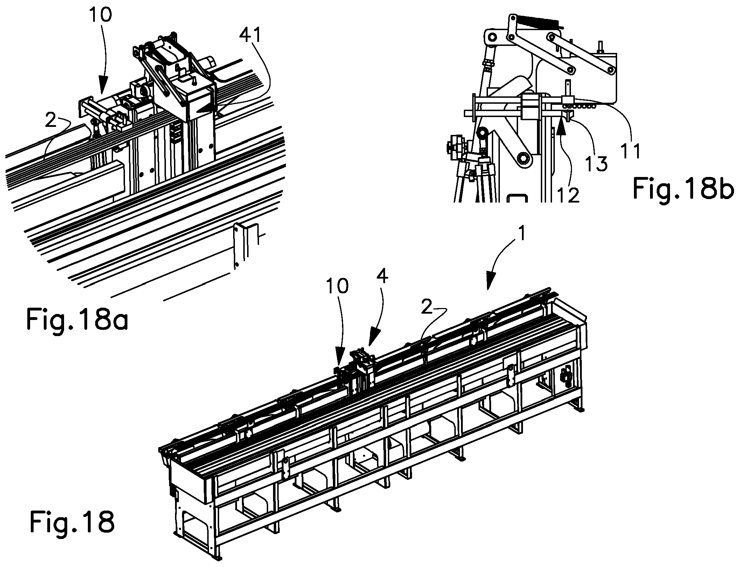

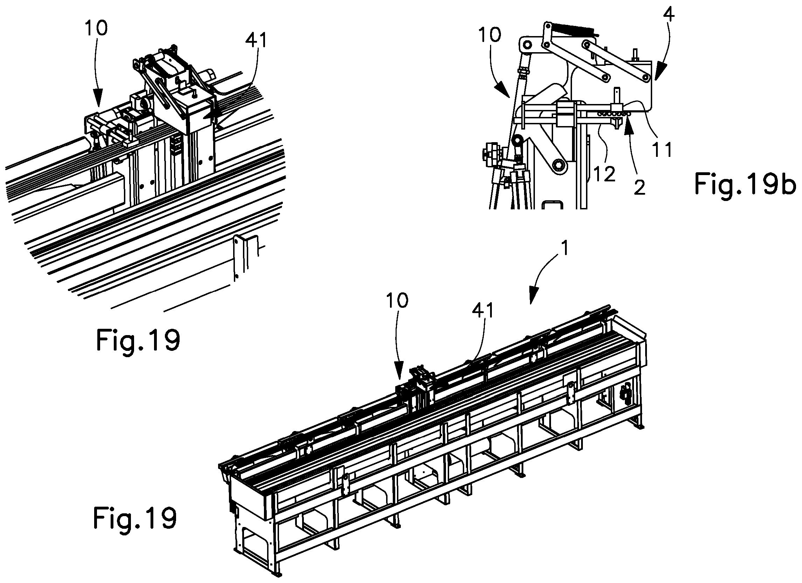

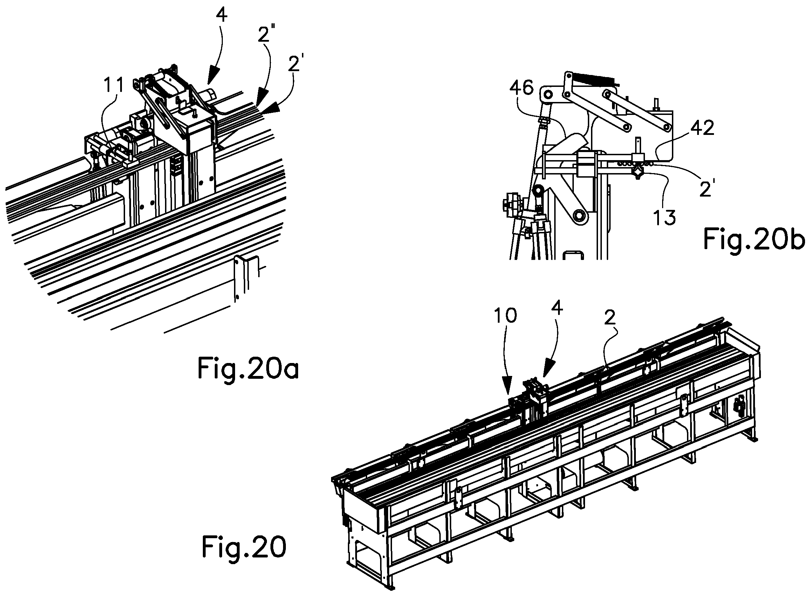

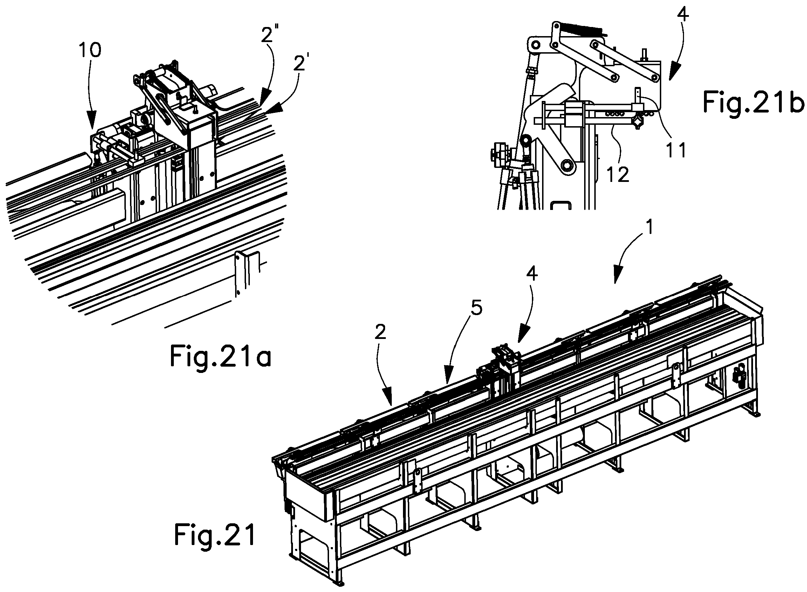

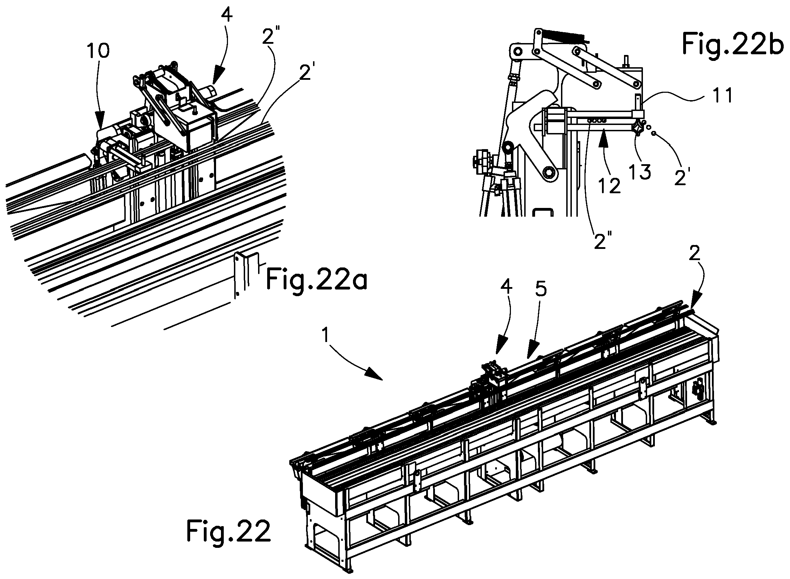

According to a further embodiment of the invention, entirely similar for the rest, the gripping unit 4 may be associated to a counting and separating unit 10, configured to separate a desired number of elements 2 from the collected elements 2 (see Figures 17 to 22).

In practice, the aforementioned counting and separating unit 10 may comprise direct or indirect detection means 11, for example of the mechanical or optical type, suitable for detecting the number of elements 2 collected altogether from the gripping unit 4, and a separating member 12, for example made from a movable arm and provided with a separating portion 13, capable of dividing the collected elements 2, gripping the operating portion 42, and of dragging the excess number 2' of the elements 2 according to a separating movement, by relative sliding on the operative portion 42, towards the support plane 3. In this way it is possible to keep gripping on the gripping member 41 only a determined number 2" of elements 2, in order to be so available, following the next supply steps, described below, to the plant transfer station.

Alternatively, it is possible to provide that following the separation motion the determined number 2" of the elements 2 is separated from the excess number 2', being transferred towards the transfer station and that, simultaneously, the excess number 2' remains gripping at the gripping member 41, in order to be used in a subsequent feeding step.

For example, the separation between the determined number 2" and the excess number 2' of elements 2 may be made when the gripping member 41 is in the spaced configuration, in particular with the operating portion 42 tilted, in particular orthogonal, to the support plane 3, or in the oriented configuration, in particular with the operating portion 42 parallel to the support plane 3, as illustrated for example in Figures 17 to 22.

More precisely, the described separating movement may take place for any orientation of the operative portion 42, in a direction preferably parallel to the same operative portion 42 or, more precisely, to the surface of the same operative portion 42 which initially keeps the elements 2 gripping.

In the event that the gripping of the elements 2 occurs by magnetic attraction, the separation between the determined number 2" and the excess number 2' of the elements 2 preferably takes place by sliding on the same operative portion 42 of the elements 2 involved.

Alternatively, it is possible to provide that the same gripping member 41 may separate a determined number 2" of the elements 2 with the aid of a counting means, of the optical or mechanical type for example. This separation may take place by actuating in a controlled manner the gripping member 41 in a controlled manner, preferably in the spaced configuration with the operative portion 42 substantially arranged orthogonally to the support plane 3 according to the aforementioned separating movement. In practice, to separate a determined number 2" of the elements 2, the gripping member 41 makes a controlled stroke in the direction of a suitable abutment element or of the same abutment structure 46, so that the gripped elements 2 are caused to slide on the operating portion 42. This sliding causes progressive discharge of an excess number 2' of the elements 2 opposite to the abutment element from the operative portion 42 and, therefore, separation from the grip of the gripping member 41.

The remaining elements 2, equal to the determined number 2", may instead remain gripped on the operative portion 42 of the gripping member 41, to be fed according to what is described below through the intervention of the transfer group 5.

The transfer unit 5 is configured to cooperate advantageously with the gripping unit 4 preferably in the disengagement step described above, as well as for transferring the collected elements 2.

More precisely, the transfer unit 5 comprises at least one support member 51, preferably a plurality of support members 51.

The support members 51 are preferably aligned laterally to the support plane 3 and, in particular in the case in which the elements 2 are collected at a central grip portion 2a, opposite on each side with respect to the gripping group 4.

The support members 51 may be made, for example, by respective brackets, carried cantilevered by the frame 33 of the apparatus 1.

The support members 51 may be of any number, for example as in the embodiment shown only as example, three pairs of support members 51 may be provided opposite two by two with respect to the central gripping group 4.

Each support member 51 is movable according to an inserting motion, to be inserted at the bottom of the collected elements 2, even if bent, from the gripping unit 4 at respective spaced portions 2b with respect to the gripping portion 2a. Following this insertion motion, each support member 51 engages below the aforementioned spaced portions 2b, bringing them, preferably by raising them, to the same height, defining a transfer plane 6 (see in particular Figures 14 and 14a).

Advantageously, the support members 51, as they are inserted under the elements 2, are raised so that they reach the height of the gripping portion 2a of the collected elements 2, assumed by the portion itself following the collecting motion described above, so as to facilitate the insertion of the subsequent support members 51 and operate at the same time the untangling of the elements 2.

The support members 51 may be for example movable according to a rotary-translational movement, to make the aforesaid inserting motion, from an inactive, for example lowered configuration, in which the support members 51 are aligned laterally to the support plane 3, to a support configuration, in which for example the support members 51 are oriented perpendicularly to the longitudinal extension of the support plane 3 itself, and raised to support the aforementioned spaced portions 2b of the elements 2 collected from the gripping member 41.

For example, the support members 51 may be articulated to the framework 33, rotatable according to a transverse axis, in particular vertical, orthogonal to the support plane 3.

Alternatively, it is possible to provide for the aforementioned inserting motion to occur by rotation of the support members 51 according to an axis parallel to the aforesaid longitudinal direction. In this case, in the aforementioned inactive configuration the support members 51 may be arranged tilted below the already collected elements 2, to be supported.

Alternatively, it is further possible to provide for the aforementioned inserting motion to take place by translation of the support members 51, in a direction parallel to the aforementioned transfer plane 6, between the inactive configuration, retracted in the half-space opposed to the support plane 3 with respect to the abutment barrier 32, and the support configuration, extracted in the half-space of the same support plane 3.

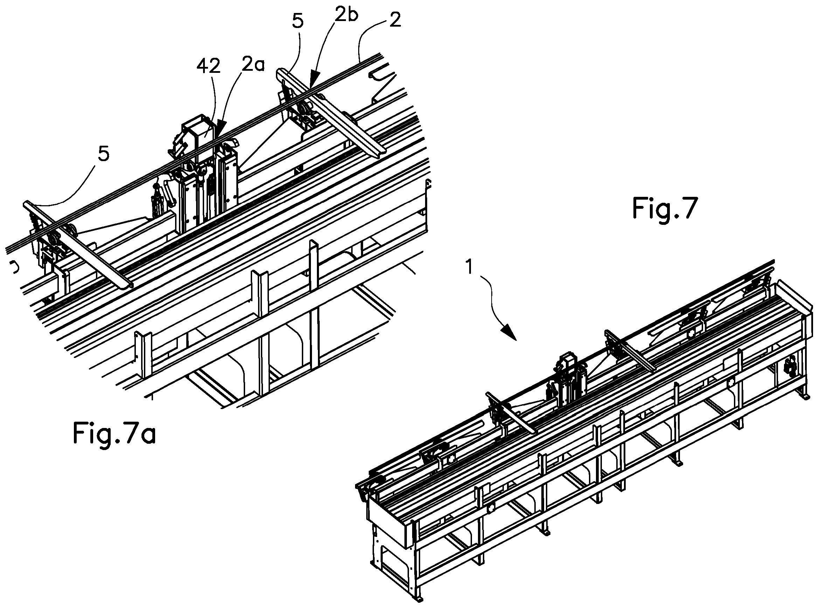

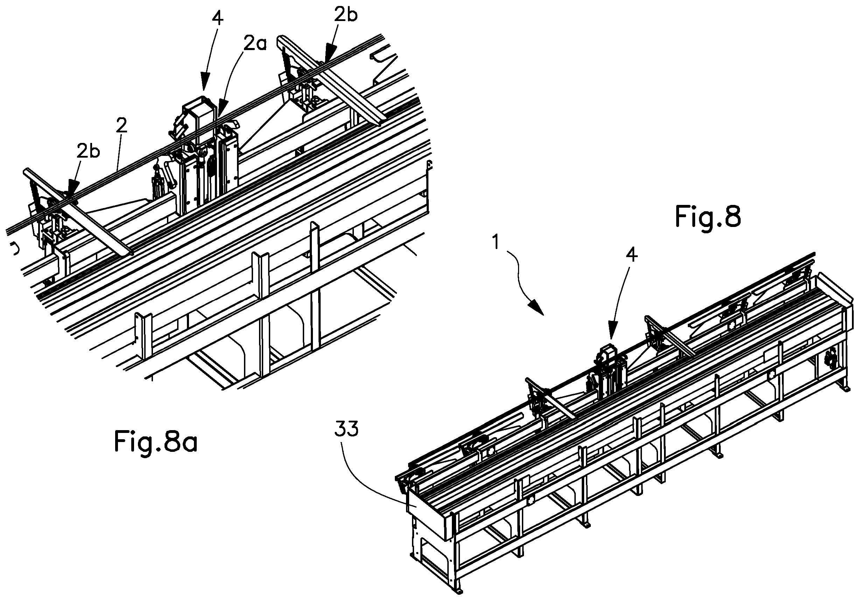

Preferably the support members 51 are moved in succession, on each side of the gripping member 41, according to the aforesaid inserting motion. For example, Figures 7 and 7a show a pair of support members 51 in a rotated condition, lowered below the collected elements 2, while figures 8 and 8a show the same pair of support members 51, raised to support respective spaced portions 2b, while the remaining two pairs of support members 51, on each side of the gripping member 41, are in an inactive configuration, waiting to be actuated in succession according to the same inserting motion.

In this regard, it should be noted that by virtue of the flexibility of the elements 2 and of the respective weight, these are subjected to an inflection, arranging themselves according to a inflected configuration, differently from what is represented in Figures 1 to 22 for simplicity, with the ends facing the bottom and the gripping portion 2a raised by the gripping member 41.

Therefore the inserting motion described above, exerted by the support members 51, takes place effectively, considering the inflexion of the elements. More precisely, this motion takes place advantageously in succession, from the gripping portion 2a, which is more raised, towards the ends of the collected elements 2, progressively raising the respective spaced portions 2b to the height where, in the respective step, the gripping portion 2a is located. In this way the collected elements 2 are progressively raised on the transfer plane 6 simultaneously untangled from the rest of elements deposited on the support plane 3.

The transfer unit 5 is also movable according to a transfer movement, to transfer the elements 2 collected in a transverse transfer direction, opposite to the support plane 3.

More precisely, the support members 51 may be actuated, for example oscillatable, by known actuation means, between the aforementioned substantially horizontal support configuration and a transfer configuration, substantially tilted with respect to the horizontal, so as to cause movement, in particular rolling, of the elements 2 taken in the aforesaid transverse direction.

The method for feeding elongated elements according to the invention, as well as the operation of the apparatus that actuates it, can be easily understood from the preceding description.

In a first step, a plurality of elements 2 is released on the support plane 3, for example by loosening a previously stored and transported bundle, with the elements 2 arranged substantially side by side longitudinally, even in a disorderly manner.

The gripping unit 4, arranged in the inactive position and with the gripping member 41 in the spaced configuration, is actuated according to the collecting motion. More precisely, the gripping member 41 preferably emerges from the support plane 3 and is oriented so as to bring the operative portion 42 closer to the elements 2 to be collected (see Figures 1 to 3).

Following the interaction with the operating portion 42, at least a part of elements 2 arranged on the support plane 3 is intercepted by the gripping member 41 (see Figures 4, 4a).

According to the same collecting motion, the gripping member 41 is then raised, thus lifting only the collected elements 2, then intercepted by the interaction of the operating portion 42 (see Figures 5, 5a).

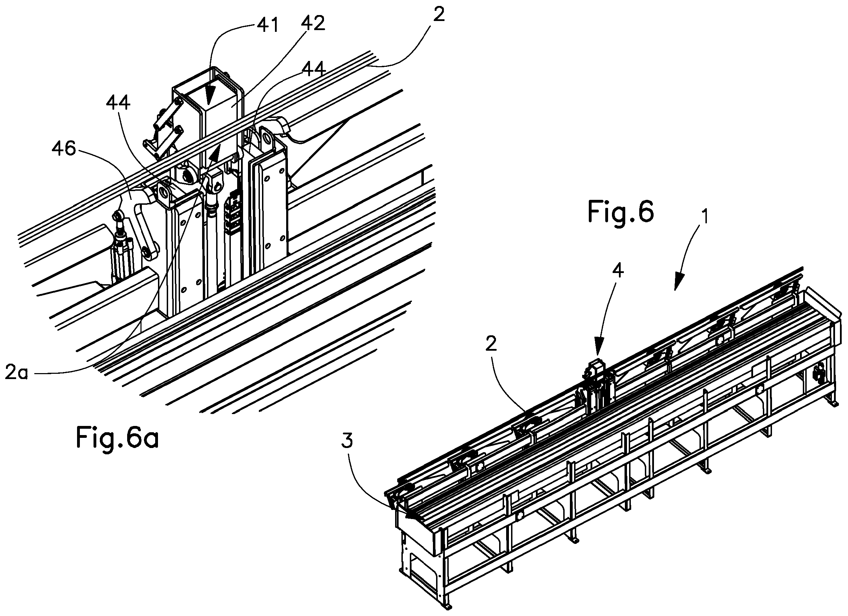

In a suitable phase relationship, before or after the inserting motion of the transfer unit 5, the gripping member 41 may be actuated according to the orientation movement, so as to orient the elements 2 collected simultaneously. In particular, the operative portion 42 is preferably, but not limitedly, rotated so as to arrange the respective operative surface transversely, in particular orthogonally, with respect to the support plane 3. This overturning advantageously has a component in the aforementioned transverse transfer direction, already approaching, to some extent, the gripping portion 2a of the collected elements 2 gripped on the gripping member 41, at the transfer station (see Figures 6, 6a).

The transfer unit 5 is activated according to the inserting motion. In practice, the support members 51 are actuated according to the aforementioned motion preferably in succession, two by two if the gripping portion 2a is central, initially intercepting the respective spaced portions 2b and then raising them preferably at the same level as the gripping member 41 (see Figures 7 to 12).

The gripping unit 4 is then actuated according to the disengagement motion, preparing the abutment structure 46 (see in particular Figures 13, 13a) and moving, according to a return stroke with respect to the collecting motion, the gripping member 41. The disengagement motion thus releases the collected elements 2 resting on the transfer plane 6 defined by the support members 51 in the aforementioned support configuration (see Figures 14, 14a, 15, 15a).

Possibly the disengagement motion may be preceded by a counting and separating step of a determined number 2" of the elements 2, activating the gripping member 41 in the aforementioned disengagement motion according to a controlled stroke, for example to release the number in excess 2' of the elements 2 on the support plane 3, or by suitably actuating the separating and counting unit 10 associated with the gripping unit 4. In any case, the separation of a determined number 2' of elements 2 takes place after a step of counting the elements 2 gripped by the gripping member 41, by the counting means 11.

Finally the transfer group 5 is operated according to the transfer movement, preferably by appropriately inclining the support members 51, so as to cause the displacement, in particular the rolling, of the elements 2 collected along the aforesaid transverse direction, opposite to the support plane 3 from which the same elements 2 come.

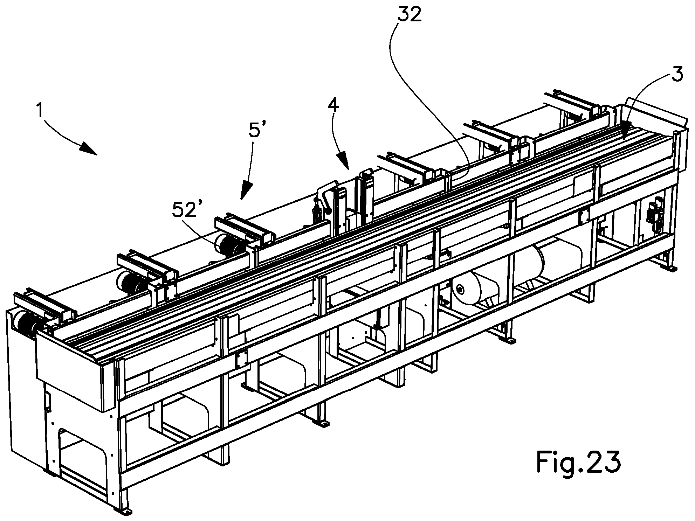

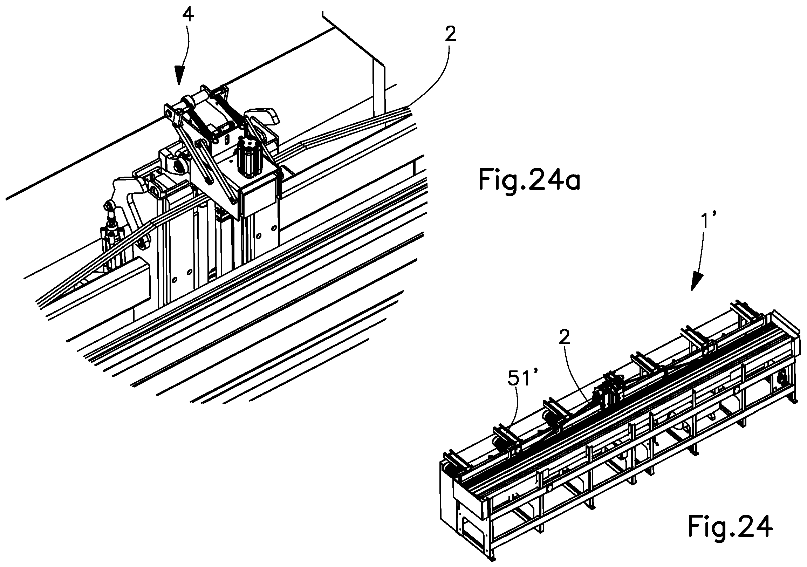

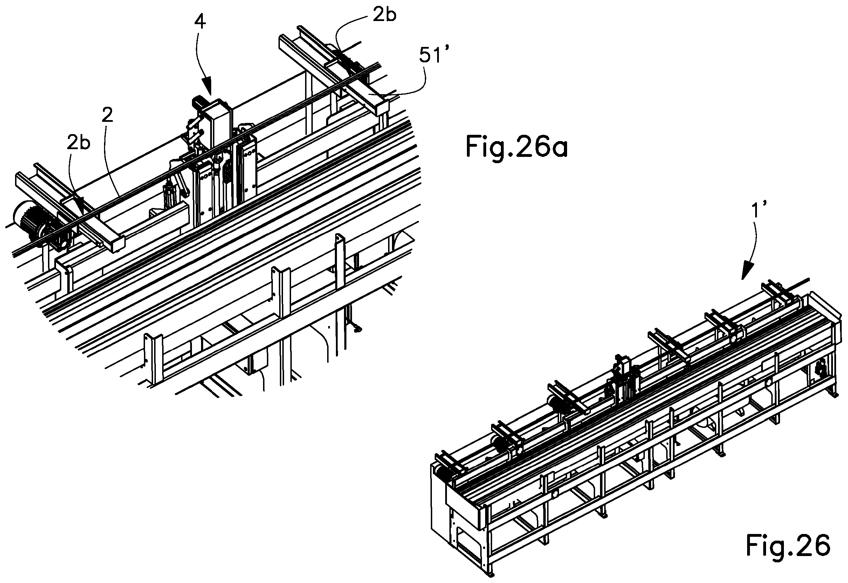

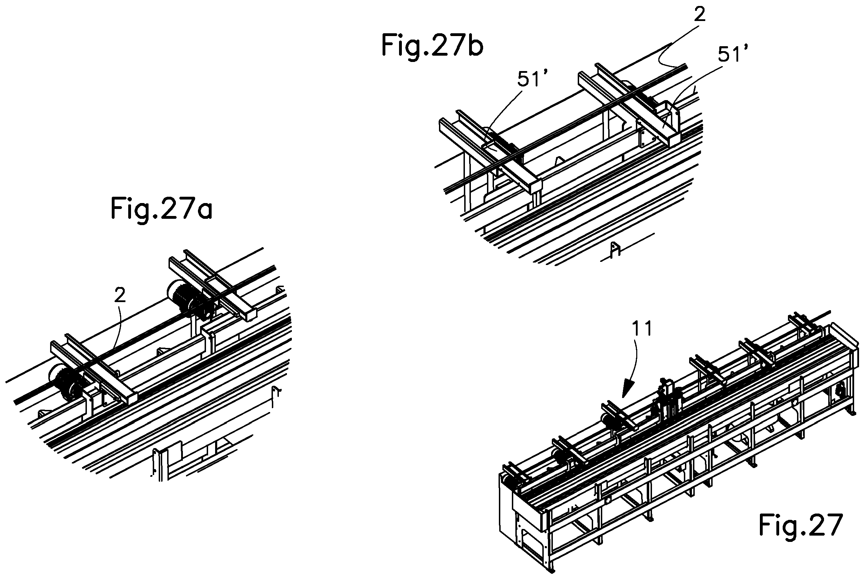

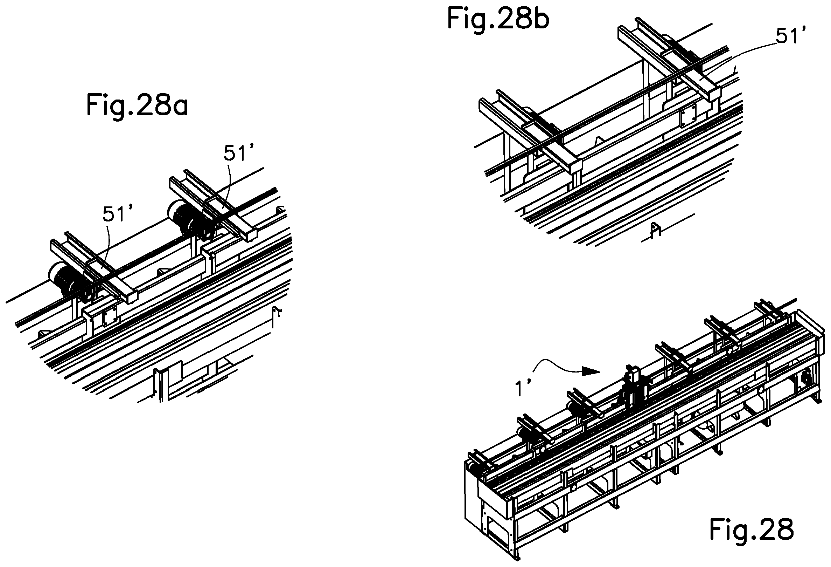

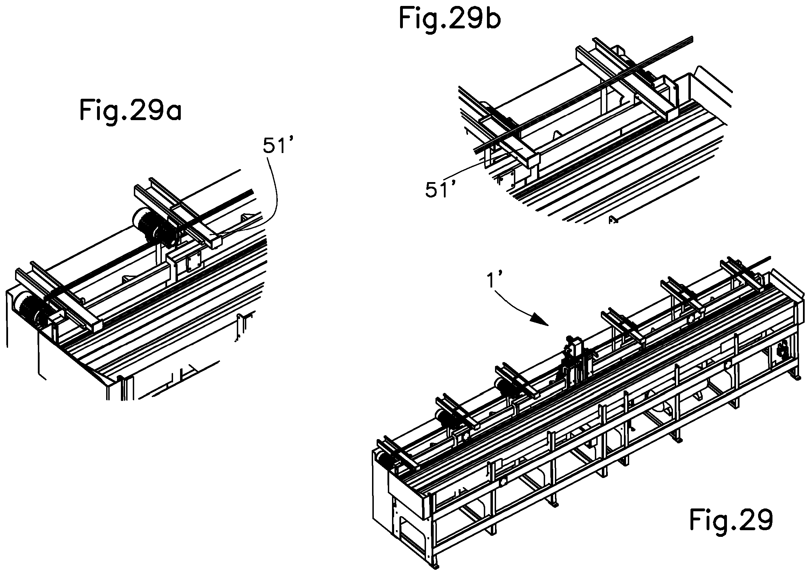

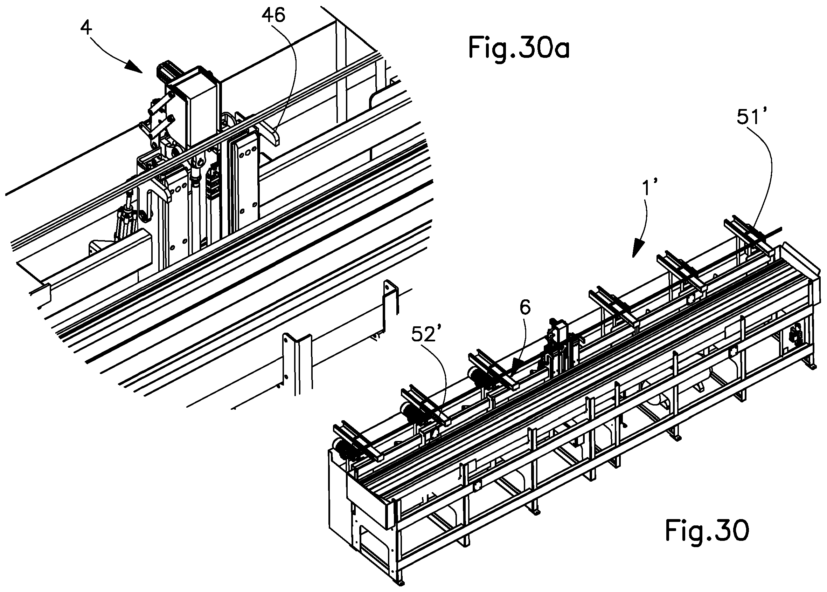

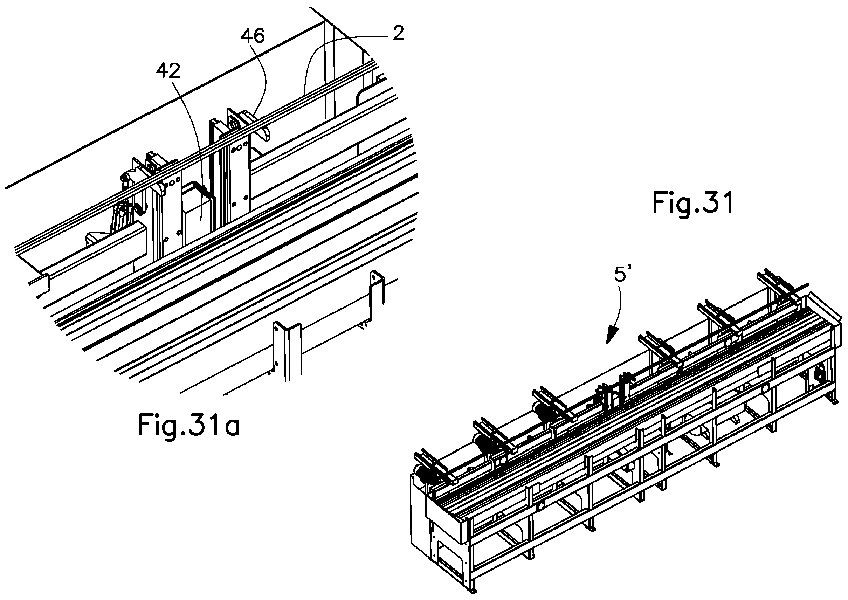

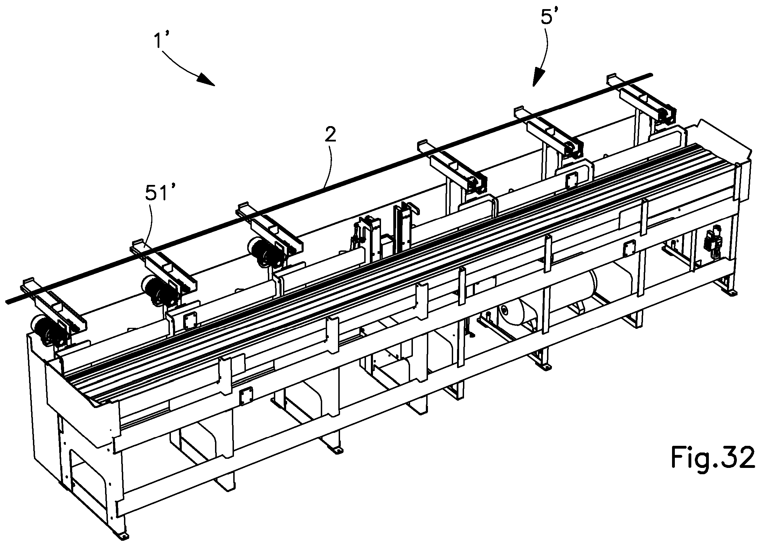

According to a third embodiment illustrated in Figures 23 to 32, for the rest entirely similar to the first or second illustrated embodiment, it is possible to provide a further transfer motion of the elements 2 collected from the gripping unit 4. For the rest, the operating groups different from the transfer group 5' are instead functionally and structurally similar to the other embodiments described.

The transfer unit 5', in particular, comprises at least one support member 51, preferably, as in the illustrated case, a plurality of support members 51'.

The support members 51' are also in this case preferably aligned laterally to the support plane 3 and, in particular if the elements 2 are collected at the central gripping portion 2a, opposite on each side of the gripping group 4.

The support members 51' are preferably made by means of brackets that are counterbalanced by the apparatus.

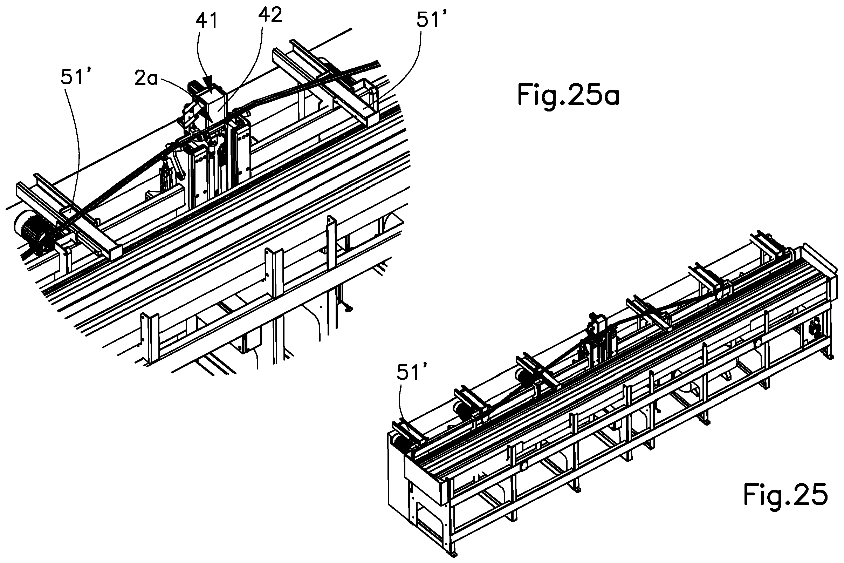

They are equipped with the aforementioned inserting motion, to be inserted below the elements 2 collected from the gripping group 4, at the spaced portions 2b from the gripping portion 2a. Figure 25a illustrates in particular the inflection undergone by the collected elements 2, following the operated lifting of the gripping unit 4.

The inserting motion of the support members 51' takes place preferably by translation of the support members 51' in a direction parallel to the aforementioned transfer plane 6, between the inactive configuration, retracted in the half-space opposed to the support plane 3 with respect to the abutment barrier 32, if provided, and the support configuration, extracted in the half-space of the same support plane 3.

Preferably the support members 51' are moved in succession, on each side of the gripping member 41, according to the aforesaid inserting motion, from the gripping portion 2a, more raised, towards the ends of the collected elements 2.

Preferably, the supporting members 51' are progressively lifted to bring the spaced portions 2b of the collected elements 2 substantially to the same raised level or to a level that is in any case suitable for the subsequent transfer movement. This operation, moreover, as described above, may facilitate the untangling of the elements 2.

The transfer unit 5' is also movable according to the aforementioned transfer movement, to transfer the collected elements 2 in a transverse transfer direction, opposite to the support plane 3.

The support members 51' are operable, for example transportable, by known actuation means 52', for example an electric motor member, pneumatic and the like, between the aforementioned support configuration, substantially extracted towards the support plane 3, substantially horizontal and the aforementioned transfer configuration, retracted towards the transfer station, also substantially horizontal in such a way as to cause transport, therefore the movement, without rolling and without sliding, of the elements 2 collected in the aforesaid transverse direction towards the transfer station.

The aforementioned transfer motion does not cause any relative motion of the elements 2 with respect to the support members 51'.

Therefore, advantageously, the elements 2 transferred by the support members 51' maintain an ordered configuration, in particular untangled, aligned and/or mutually juxtaposed.

The method according to the invention and the apparatus that actuates it therefore enable feeding elongated elements in an effective and easy manner.

In the practical embodiment of the invention, the used materials, as well as the shape and the dimensions, may be modified depending on requirements.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. Method for feeding elongated metal elements, in particular metal profiles, for example intended for a welding, cutting and/or bending cycle, comprising the steps of:
a. preparing a plurality of elongated elements (2) along a longitudinal direction, resting on a support plane (3);
b. actuating a gripping unit (4) according to a collecting motion at said support plane (3), placing a respective operative portion (42) of said gripping unit (4) close to a gripping portion (2a) of said elements (2), acting on said gripping portion (2a) by magnetic attraction, so that at least a part of said elements (2) is lifted from said supporting plane (3) at said respective gripping portion (2a);
c. actuating in a inserting motion a transfer unit (5, 5') comprising at least one support member (51, 51') arranged along said longitudinal direction, so as to insert it below a respective portion (2b) spaced from said gripping portion (2a) of said collected elements (2), and so as to lift said spaced portion (2b), maintaining it in a support configuration;
d. actuating said gripping unit (4) in a disengagement motion to disengage said collected elements (2);
e. leaving said collected elements (2) resting on said transfer unit (5, 5'), said support member (51, 51') defining in said support configuration a transfer plane (6);
**characterized in that** the method further comprises:
f. positioning said gripping unit (4) in an inactive position spaced from said transfer unit (5, 5'), retractably, below said transfer plane (6);
g. actuating said transfer unit (5, 5') in a transfer motion, so that said collected elements (2) are caused to roll or to slide or to be displaced without rolling or sliding in a transverse transfer direction, opposite to said support plane (3), towards a transfer station adjacent to said support plane (3);
wherein said gripping unit (4) is interposed between said support plane (3) and said transfer station, so that during said transfer motion said collected elements (2) overstep said gripping unit (4) arranged in said inactive position.

2. The method according to claim 1, **characterised in that** said step of b. actuating said gripping unit (4) according to said gripping motion provides that said gripping member (41) acts on said gripping portion (2a) from a position wherein the gripping member (41) is arranged above said gripping portion (2a).

3. The method according to claim 1 or 2, **characterised in that** said step of f. actuating said transfer unit (5') in said transferring motion provides for actuating said at least one support member (51') between said support configuration, drawn towards said support plane (3) and a transfer configuration, retracted towards said transfer station, so as to cause said elements (2) to be transported without rolling or sliding towards said transfer station.

4. The method according to claim 1 or 2, **characterised in that** said step of f. actuating said transfer unit (5) in a transfer motion provides for tilting said support member (51) so as to convey by rolling said elements (2) resting on said transfer plane (6) along said transverse transfer direction.

5. The method according to one of the preceding claims, **characterised in that** said step of d. actuating said gripping unit (4) in a disengagement motion occurs by orienting said gripping unit (4), so as to arrange said operative portion (42) together with said gripping portion (2a) attracted to it according to a plane transverse to said transfer plane (6), to actuate a relative sliding between said operative portion (42) and said gripping portion (2a), placed in abutment of an abutment structure (46) of said gripping unit (4).

6. The method according to any one of the preceding claims, **characterised in that** said step of e. arranging said gripping unit (4) in an inactive position occurs by means of said disengagement motion.

7. The method according to any one of the preceding claims, **characterised in that** said step of b. actuating said gripping unit (4) according to a collecting motion and or said step of d. operating said gripping unit (4) according to a disengagement motion provide for actuating said gripping member (41) according to an orientation motion to orient an operative portion (42) of said gripping member (41) between a configuration substantially parallel to said support plane (3) so as to interact with said elements (2) to be collected or disengaged, and a configuration spaced from said elements (2).

8. The method according to any one of the preceding claims, **characterised in that** said step of a. preparing a plurality of elongated elements (2) along a longitudinal direction provides for arranging said elements (2) against an abutment barrier (32) arranged along a longitudinal edge (31) of said support plane (3), said transfer plane (6) being higher than said abutment barrier (32), to enable said transfer motion of said collected elements (2).

9. The method according to one of the preceding claims, **characterised in that** said step of c. actuating said transfer unit (5) in said inserting motion to insert said support member (51) below said spaced portion (2b) provides for rotating said support member (51) about a transverse axis, in particular orthogonal, to said support plane (3) or, alternatively, to translate said support member (51') from a retracted configuration with respect to said supporting plane (3) to a configuration extracted towards said supporting plane (3).

10. The method according to one of the preceding claims, **characterised in that** said step of c. actuating said transfer unit (5, 5') in said inserting motion in order to lift said spaced portion (2b) of said elements (2) provides for actuating a translational motion along a substantially vertical direction or a rotary motion about a substantially horizontal axis of said support member (51, 51') inserted below said elements (2) to be fed.

11. The method according to any one of the preceding claims, **characterised in that** said step of b. actuating a gripping unit (4) according to a collecting motion provides for collecting at least a part of said elements (2) at a central gripping portion (2a), said gripping unit (4) being arranged centrally with respect to said support plane (3).

12. The method according to claim 11, **characterised in that** said step of c. actuating a transfer unit (5, 5') in a inserting motion provides for actuating in succession a plurality of pairs of support members (51, 51'), each pair being opposed by each part of said gripping unit (4) centrally located.

13. The method according to any one of the preceding claims, **characterised in that** said step of d. actuating said gripping unit (4) in a disengagement motion is preceded by the step of counting and separating a determined number (2") of said elements (2) from an excess number (2') by means of a separation and counting unit (10) associated with said gripping unit (4).

14. Apparatus for feeding elongated metal elements, in particular metal profiles, comprising a support plane (3) for providing a plurality of said resting elements (2) arranged along a longitudinal direction, a gripping unit (4) comprising an operating portion (42) capable of acting on a gripping portion (2a) of said elements (2) by magnetic attraction, said gripping unit (4) operating at said support plane (3), in order to collect at least a part of said elements (2) at said respective gripping portion (2a), and to lift said part of said elements (2) from said support plane (3), a transfer unit (5, 5') provided with at least one support member (51, 51') arranged along said longitudinal direction movable by an inserting motion to act as a support for said collected elements (2), at a respective spaced portion (2b) from said gripping portion (2a), on a transfer plane (6) raised with respect to said support plane (3), at which said collected elements (2) are released resting and by a transfer motion, so as to cause said elements (2) to roll or to slide or to be displaced without rolling or sliding, said elements (2) collected in a transverse transfer direction, opposite to said support plane (3), towards a transfer station adjacent to said support plane (3), **characterized in that** said gripping unit (4) being movable by a disengagement motion from said collected elements (2), positionable in an inactive position spaced from said transfer group (5, 5'), retractable, below said transfer plane (6), and **in that** said gripping unit (4) is interposed between said support plane (3) and said transfer station, so that during said transfer motion said collected elements (2) overstep said gripping unit (4) positioned in said inactive position.

15. The apparatus according to claim 14, **characterised in that** in said gripping motion said gripping member (41) acts on said gripping portion (2a) from a position wherein said gripping member (41) is arranged above said gripping portion (2a).

16. The apparatus according to claim 14 or 15, **characterised in that** said at least one support member (51') of said transfer unit (5') is operable in said transferring motion between a support configuration extracted towards said support plane (3) and a transfer configuration retracted towards said transfer station, so as to cause said displacement of said collected elements (2) without rolling or sliding.

17. The apparatus according to claim 14 or 15, **characterised in that** said transfer unit (5) is oscillatable according to said transfer motion, about an axis parallel to said longitudinal direction, so as to convey said elements (2) collected by rolling or sliding along said transfer direction.

18. The apparatus according to one of claims 14 to 17, **characterised in that** said at least one support member (51') is made by a bracket.

19. The apparatus according to claim 14 or 15, **characterised in that** according to said disengagement motion said gripping unit (4) is orientable so that said operative portion (42) is arranged in a direction transverse to said transfer plane (6), and movable along said transverse direction to provide a relative sliding between said operative portion (42) and said gripping portion (2a), said gripping unit (4) comprising an abutment structure (46) for detecting said elements (2) during said disengagement motion.

20. The apparatus according to any one of the claims from 14 to 15, **characterised in that** said transfer unit (5) is rotatable according to said inserting motion, about a transverse axis, in particular orthogonal, to said support plane (3).

21. The apparatus according to any one of claims 14 to 20, **characterised in that** said gripping unit (4) is arranged centrally with respect to said support plane (3).

22. The apparatus according to claim 21, **characterised in that** it comprises a plurality of pairs of support members (51, 51'), each pair being opposed by each part of said gripping unit (4) arranged centrally.

23. The apparatus according to one of claims 14 to 22, **characterised in that** it comprises a separating and counting unit (10) associated with said gripping unit (4), for counting and separating a given number (2") equal to a number (2') of said elements (2) in excess.

24. The apparatus according to any one of the claims from 14 to 23, **characterised in that** it comprises a processing unit configured to control at least one of said collecting motion, said disengagement motion, said inserting motion and said transfer motion.

25. A computer program comprising instructions which, when the program is run by said control unit of the apparatus according to claim 24, enables said apparatus to implement the method according to one of claims 1 to 13.

## Patentansprüche

1. Verfahren zum Zuführen länglicher Metallelemente, insbesondere Metallprofile, die beispielsweise für einen Schweiß-, Schneid- und/oder Biegezyklus bestimmt sind, das die folgenden Schritte umfasst:
a. Vorbereiten einer Vielzahl länglicher Elemente (2) entlang einer Längsrichtung, die auf einer Stützebene (3) ruht:
b. Betätigen einer Greifeinheit (4) gemäß einer Sammelbewegung an der Stützebene (3), Platzieren eines jeweiligen operativen Abschnitts (42) der Greifeinheit (4) in der Nähe eines Greifabschnitts (2a) der Elemente (2), Einwirken auf den Greifabschnitt (2a) durch magnetische Anziehung derart, dass mindestens ein Teil der Elemente (2) von der Stützebene (3) an dem jeweiligen Greifabschnitt (2a) angehoben wird;
c. Betätigen in einer Einsetzbewegung einer Transfereinheit (5, 5'), die mindestens ein Stützelement (51, 51') umfasst, das entlang der Längsrichtung eingerichtet ist, um es unter einen jeweiligen Abschnitt (2b) einzusetzen, der von dem Greifabschnitt (2a) der gesammelten Elemente (2) beabstandet ist, und um den beabstandeten Abschnitt (2b) anzuheben und in einer Stützkonfiguration zu halten;
d. Betätigen der Greifeinheit (4) in einer Ausrückbewegung, um die gesammelten Elemente (2) auszurücken;
e. Ruhenlassen der gesammelten Elemente (2) auf der Transfereinheit (5, 5'), wobei das Stützelement (51, 51') in der Stützkonfiguration eine Transferebene (6) definiert;
**dadurch gekennzeichnet, dass** das Verfahren weiter Folgendes umfasst:
f. Positionieren der Greifeinheit (4) in einer inaktiven Position, die von der Transfereinheit (5, 5') beabstandet ist, einziehbar unter der Transferebene (6);
g. Betätigen der Transfereinheit (5, 5') in einer Transferbewegung derart, dass die gesammelten Elemente (2) veranlasst werden, zu rollen oder zu gleiten oder verschoben zu werden, ohne in einer Quertransferrichtung entgegengesetzt zu der Stützebene (3) in Richtung einer Transferstation, die an die Stützebene (3) angrenzt,zu rollen oder zu gleiten oder verschoben zu werden;
wobei die Greifeinheit (4) zwischen der Stützebene (3) und der Transferstation derart zwischengefügt ist, dass die gesammelten Elemente (2) während der Transferbewegung die in der inaktiven Position eingerichtete Greifeinheit (4) überschreiten.

2. Verfahren nach Anspruch 1, **dadurch gekennzeichnet, dass** der Schritt des b. Betätigens der Greifeinheit (4) gemäß der Greifbewegung bereitstellt, dass das Greifelement (41) von einer Position, in der das Greifelement (41) über dem Greifabschnitt (2a) eingerichtet ist, auf den Greifabschnitt (2a) wirkt.

3. Verfahren nach Anspruch 1 oder 2, **dadurch gekennzeichnet, dass** der Schritt des f. Betätigens der Transfereinheit (5') in der Transferbewegung Betätigen des mindestens einen Stützelements (51') zwischen der Stützkonfiguration, die in Richtung der Stützebene (3) gezogen wird, und einer Transferkonfiguration, die in Richtung der Transferstation zurückgezogen wird, bereitstellt, um zu veranlassen, dass die Elemente (2) ohne Rollen oder Gleiten in Richtung der Transferstation transportiert werden.

4. Verfahren nach Anspruch 1 oder 2, **dadurch gekennzeichnet, dass** der Schritt des f. Betätigens der Transfereinheit (5) in einer Transferbewegung ein Kippen des Stützelements (51) bereitstellt, um durch Rollen die Elemente (2), die auf der Transferebene (6) ruhen, entlang der transversalen Transferrichtung zu fördern.

5. Verfahren nach einem der vorstehenden Ansprüche, **dadurch gekennzeichnet, dass** der Schritt des d. Betätigens der Greifeinheit (4) in einer Ausrückbewegung durch Ausrichten der Greifeinheit (4) auftritt, um den operativen Abschnitt (42) zusammen mit dem an ihn angezogenen Greifabschnitt (2a) gemäß einer Ebene quer zu der Transferebene (6) einzurichten, um ein relatives Gleiten zwischen dem operativen Abschnitt (42) und dem Greifabschnitt (2a) zu betätigen, der in Anlage an einer Anschlagstruktur (46) der Greifeinheit (4) platziert ist.

6. Verfahren nach einem der vorstehenden Ansprüche, **dadurch gekennzeichnet, dass** der Schritt e. des Einrichten der Greifeinheit (4) in einer inaktiven Position mittels der Ausrückbewegung erfolgt.

7. Verfahren nach einem der vorstehenden Ansprüche, **dadurch gekennzeichnet, dass** der Schritt des b. Betätigens der Greifeinheit (4) gemäß einer Sammelbewegung und/oder der Schritt des d. Betätigens der Greifeinheit (4) gemäß einer Ausrückbewegung das Betätigen des Greifelements (41) gemäß einer Ausrichtungsbewegung zum Ausrichten eines operativen Abschnitts (42) des Greifelements (41) zwischen einer Konfiguration, die im Wesentlichen parallel zu der Stützebene (3) ist, um mit den zu sammelnden oder auszurückenden Elementen (2) zusammenzuwirken, und einer Konfiguration, die von den Elementen (2) beabstandet ist, bereitstellen.

8. Verfahren nach einem der vorstehenden Ansprüche, **dadurch gekennzeichnet, dass** der Schritt a. des Vorbereitens einer Vielzahl länglicher Elemente (2) entlang einer Längsrichtung das Einrichten der Elemente (2) gegen eine Widerlagerbarriere (32) bereitstellt, die entlang einer Längskante (31) der Stützebene (3) eingerichtet ist, wobei die Transferebene (6) höher als die Widerlagerbarriere (32) ist, um die Transferbewegung der gesammelten Elemente (2) zu ermöglichen.

9. Verfahren nach einem der vorstehenden Ansprüche, **dadurch gekennzeichnet, dass** der Schritt des c. Betätigens der Transfereinheit (5) in der Einsetzbewegung, um das Stützelement (51) unter den beabstandeten Abschnitt (2b) einzusetzen, ein Drehen des Stützelements (51) um eine Querachse, insbesondere orthogonal zu der Stützebene (3), oder alternativ ein Verschieben des Stützelements (51') von einer zurückgezogenen Konfiguration in Bezug auf die Stützebene (3) in eine Konfiguration, die in Richtung der Stützebene (3) herausgezogen ist, bereitstellt.

10. Verfahren nach einem der vorstehenden Ansprüche, **dadurch gekennzeichnet, dass** der Schritt des c. Betätigens der Transfereinheit (5, 5') in der Einsetzbewegung, um den beabstandeten Abschnitt (2b) der Elemente (2) anzuheben, das Betätigen einer Verschiebungsbewegung entlang einer im Wesentlichen vertikalen Richtung oder einer Rotationsbewegung um eine im Wesentlichen horizontale Achse des Trägerelements (51, 51'), das unter den zuzuführenden Elementen (2) eingesetzt ist, bereitstellt.

11. Verfahren nach einem der vorstehenden Ansprüche, **dadurch gekennzeichnet, dass** der Schritt des b. Betätigens einer Greifeinheit (4) gemäß einer Sammelbewegung das Sammeln mindestens eines Teils der Elemente (2) an einem zentralen Greifabschnitt (2a) bereitstellt, wobei die Greifeinheit (4) in Bezug auf die Stützebene (3) zentral eingerichtet ist.

12. Verfahren nach Anspruch 11, **dadurch gekennzeichnet, dass** der Schritt des c. Betätigens einer Transfereinheit (5, 5') in einer Einsetzbewegung ein aufeinanderfolgendes Betätigen einer Vielzahl von Paaren von Stützelementen (51, 51') bereitstellt, wobei zu jedem Paar jeder Teil der zentral eingerichteten Greifeinheit (4) entgegengesetzt liegt.

13. Verfahren nach einem der vorstehenden Ansprüche, **dadurch gekennzeichnet, dass** dem Schritt d. des Betätigens der Greifeinheit (4) in einer Ausrückbewegung der Schritt des Zählens und Trennens einer bestimmten Anzahl (2") der Elemente (2) von einer überschüssigen Anzahl (2') mittels einer Trenn- und Zähleinheit (10), die der Greifeinheit (4) zugeordnet ist, vorausgeht.

14. Einrichtung zum Zuführen länglicher Metallelemente, insbesondere Metallprofile, mit einer Stützebene (3) zum Bereitstellen einer Vielzahl der Auflageelemente (2), die entlang einer Längsrichtung eingerichtet sind, einer Greifeinheit (4), die einen Betätigungsabschnitt (42) umfasst, der in der Lage ist, auf einen Greifabschnitt (2a) der Elemente (2) durch magnetische Anziehung einzuwirken, wobei die Greifeinheit (4) an der Stützebene (3) arbeitet, um mindestens einen Teil der Elemente (2) an dem jeweiligen Greifabschnitt (2a) zu sammeln und den Teil der Elemente (2) von der Stützebene (3) anzuheben, eine Transfereinheit (5, 5'), die mit mindestens einem Trägerelement (51, 51') versehen ist, das entlang der Längsrichtung durch eine Einsetzbewegung bewegbar eingerichtet ist, um als Stütze für die gesammelten Elemente (2) an einem jeweiligen beabstandeten Abschnitt (2b) von dem Greifabschnitt (2a) auf einer in Bezug auf die Stützebene (3) angehobenen Transferebene (6) zu wirken, an der die gesammelten Elemente (2) freigegeben ruhen und durch eine Transferbewegung, um zu veranlassen, dass die Elemente (2) rollen oder gleiten oder verlagert werden, oder ohne zu rollen oder gleiten, wobei die Elemente (2) in einer Quertransferrichtung entgegengesetzt zu der Stützebene (3) zu einer Transferstation benachbart in Richtung der Stützebene (3) gesammelt werden, **dadurch gekennzeichnet, dass** die Greifeinheit (4) durch eine Ausrückbewegung von den gesammelten Elementen (2) bewegbar ist, die in einer inaktiven Position, die von der Transfergruppe (5, 5') beabstandet ist, unter der Transferebene (6) zurückziehbar ist, und dass die Greifeinheit (4) zwischen der Stützebene (3) und der Transferstation derart eingerichtet ist, dass die gesammelten Elemente (2) während der Transferbewegung die in der inaktiven Position positionierte Greifeinheit (4) überschreiten.

15. Einrichtung nach Anspruch 14, **dadurch gekennzeichnet, dass** das Greifelement (41) bei der Greifbewegung von einer Position, in der das Greifelement (41) über dem Greifabschnitt (2a) eingerichtet ist, auf den Greifabschnitt (2a) wirkt.

16. Einrichtung nach Anspruch 14 oder 15, **dadurch gekennzeichnet, dass** das mindestens eine Stützelement (51') der Transfereinheit (5') in der Transferbewegung zwischen einer Stützkonfiguration, die in Richtung der Stützebene (3) herausgezogen ist, und einer Transferkonfiguration, die in Richtung der Transferstation zurückgezogen ist, betreibbar ist, um die Verschiebung der gesammelten Elemente (2) ohne Rollen oder Gleiten zu veranlassen.

17. Einrichtung nach Anspruch 14 oder 15, **dadurch gekennzeichnet, dass** die Transfereinheit (5) gemäß der Transferbewegung um eine Achse parallel zu der Längsrichtung oszillierbar ist, um die durch Rollen oder Gleiten entlang der Transferrichtung gesammelten Elemente (2) zu fördern.

18. Einrichtung nach einem der Ansprüche 14 bis 17, **dadurch gekennzeichnet, dass** das mindestens eine Stützelement (51') durch eine Halterung hergestellt ist.

19. Einrichtung nach Anspruch 14 oder 15, **dadurch gekennzeichnet, dass** die Greifeinheit (4) gemäß der Ausrückbewegung derart ausrichtbar ist, dass der Betriebsabschnitt (42) in einer Richtung quer zu der Transferebene (6) eingerichtet ist und entlang der Querrichtung bewegbar ist, um ein relatives Gleiten zwischen dem Betriebsabschnitt (42) und dem Greifabschnitt (2a) bereitzustellen, wobei die Greifeinheit (4) eine Anschlagstruktur (46) zum Erfassen der Elemente (2) während der Ausrückbewegung umfasst.

20. Einrichtung nach einem der Ansprüche 14 bis 15, **dadurch gekennzeichnet, dass** die Transfereinheit (5) gemäß der Einsetzbewegung um eine Querachse, insbesondere orthogonal zu der Stützebene (3), drehbar ist.

21. Einrichtung nach einem der Ansprüche 14 bis 20, **dadurch gekennzeichnet, dass** die Greifeinheit (4) zentral in Bezug auf die Stützebene (3) eingerichtet ist.

22. Gerät nach Anspruch 21, **dadurch gekennzeichnet, dass** es eine Vielzahl von Paaren von Stützelementen (51, 51') umfasst, wobei jedem Paar jeder Teil der mittig eingerichteten Greifeinheit (4) entgegengesetzt liegt.

23. Einrichtung nach einem der Ansprüche 14 bis 22, **dadurch gekennzeichnet, dass** sie eine Trenn- und Zähleinheit (10) umfasst, die der Greifeinheit (4) zugeordnet ist, um eine gegebene Anzahl (2"), die gleich einer Anzahl (2') der Elemente (2) im Überschuss ist, zu zählen und zu trennen.

24. Einrichtung nach einem der Ansprüche 14 bis 23, **dadurch gekennzeichnet, dass** sie eine Verarbeitungseinheit umfasst, die dazu konfiguriert ist, mindestens eines von der Sammelbewegung, der Ausrückbewegung, der Einsetzbewegung und der Transferbewegung zu steuern.

25. Computerprogramm, das Anweisungen umfasst, die bei Ausführung des Programms durch die Steuereinheit der Einrichtung nach Anspruch 24 die Einrichtung zum Implementieren des Verfahrens nach einem der Ansprüche 1 bis 13 befähigen.

## Revendications

1. Procédé d'alimentation d'éléments métalliques allongés, en particulier des profilés métalliques, par exemple destinés à un cycle de soudage, de découpe et/ou de pliage, comprenant les étapes suivantes :
a. la préparation d'une pluralité d'éléments (2) allongés le long d'une direction longitudinale, reposant sur un plan de support (3) ;
b. l'actionnement d'une unité de préhension (4) selon un mouvement de collecte au niveau dudit plan de support (3), en plaçant une partie opérationnelle (42) respective de ladite unité de préhension (4) à proximité d'une partie de préhension (2a) desdits éléments (2), en agissant sur ladite partie de préhension (2a) par attraction magnétique, de sorte qu'au moins une partie desdits éléments (2) soit soulevée dudit plan de support (3) au niveau de ladite partie de préhension (2a) respective ;
c. l'actionnement, dans un mouvement d'insertion, d'une unité de transfert (5, 5') comprenant au moins un organe de support (51, 51') agencé le long de ladite direction longitudinale, de manière à l'insérer en dessous d'une partie espacée (2b) respective de ladite partie de préhension (2a) desdits éléments (2) collectés, et de manière à soulever ladite partie espacée (2b), en la maintenant dans une configuration de support ;
d. l'actionnement de ladite unité de préhension (4) dans un mouvement de dégagement pour dégager lesdits éléments (2) collectés ;
e. le fait de laisser lesdits éléments (2) collectés reposer sur ladite unité de transfert (5, 5'), ledit organe de support (51, 51') définissant, dans ladite configuration de support, un plan de transfert (6) ;
**caractérisé en ce que** ledit procédé comprend en outre :
f. le positionnement de ladite unité de préhension (4) dans une position inactive espacée de ladite unité de transfert (5, 5'), de manière rétractable, en dessous dudit plan de transfert (6) ;
g. l'actionnement de ladite unité de transfert (5, 5') dans un mouvement de transfert, de sorte que lesdits éléments (2) collectés soient amenés à rouler ou à glisser ou à être déplacés sans rouler ou glisser dans une direction de transfert transversale, à l'opposé dudit plan de support (3), vers un poste de transfert adjacent audit plan de support (3) ;
dans lequel ladite unité de préhension (4) est interposée entre ledit plan de support (3) et ledit poste de transfert, de sorte que pendant ledit mouvement de transfert, lesdits éléments (2) collectés dépassent ladite unité de préhension (4) agencée dans ladite position inactive.

2. Procédé selon la revendication 1, **caractérisé en ce que** ladite étape b. d'actionnement de ladite unité de préhension (4) selon ledit mouvement de préhension prévoit que ledit organe de préhension (41) agit sur ladite partie de préhension (2a) depuis une position dans laquelle l'organe de préhension (41) est agencé au-dessus de ladite partie de préhension (2a).

3. Procédé selon la revendication 1 ou 2, **caractérisé en ce que** ladite étape f. d'actionnement de ladite unité de transfert (5') dans ledit mouvement de transfert prévoit d'actionner ledit au moins un organe de support (51') entre ladite configuration de support, tirée vers ledit plan de support (3) et une configuration de transfert, rétractée vers ledit poste de transfert, de manière à amener lesdits éléments (2) à être transportés sans rouler ou glisser vers ledit poste de transfert.

4. Procédé selon la revendication 1 ou 2, **caractérisé en ce que** ladite étape f. d'actionnement de ladite unité de transfert (5) dans un mouvement de transfert prévoit d'incliner ledit organe de support (51) de manière à transporter en les faisant rouler lesdits éléments (2) reposant sur ledit plan de transfert (6) le long de ladite direction de transfert transversale.

5. Procédé selon l'une des revendications précédentes, **caractérisé en ce que** ladite étape d. d'actionnement de ladite unité de préhension (4) dans un mouvement de dégagement se produit en orientant ladite unité de préhension (4), de manière à agencer ladite partie opérationnelle (42) conjointement avec ladite partie de préhension (2a) attirée vers elle selon un plan transversal audit plan de transfert (6), pour actionner un glissement relatif entre ladite partie opérationnelle (42) et ladite partie de préhension (2a), placée en butée contre une structure de butée (46) de ladite unité de préhension (4).

6. Procédé selon l'une quelconque des revendications précédentes, **caractérisé en ce que** ladite étape e. d'agencement de ladite unité de préhension (4) dans une position inactive se produit au moyen dudit mouvement de dégagement.

7. Procédé selon l'une quelconque des revendications précédentes, **caractérisé en ce que** ladite étape b. d'actionnement de ladite unité de préhension (4) selon un mouvement de collecte et ou ladite étape d. d'actionnement de ladite unité de préhension (4) selon un mouvement de dégagement prévoient d'actionner ledit organe de préhension (41) selon un mouvement d'orientation pour orienter une partie opérationnelle (42) dudit organe de préhension (41) entre une configuration sensiblement parallèle audit plan de support (3) de manière à interagir avec lesdits éléments (2) à collecter ou à dégager, et une configuration espacée desdits éléments (2).

8. Procédé selon l'une quelconque des revendications précédentes, **caractérisé en ce que** ladite étape a. de préparation d'une pluralité d'éléments (2) allongés le long d'une direction longitudinale prévoit d'agencer lesdits éléments (2) contre une barrière de butée (32) agencée le long d'un bord longitudinal (31) dudit plan de support (3), ledit plan de transfert (6) étant plus élevé que ladite barrière de butée (32), pour permettre ledit mouvement de transfert desdits éléments (2) collectés.

9. Procédé selon l'une des revendications précédentes, **caractérisé en ce que** ladite étape consistant c. d'actionnement de ladite unité de transfert (5) dans ledit mouvement d'insertion pour insérer ledit organe de support (51) en dessous de ladite partie espacée (2b) prévoit de faire tourner ledit organe de support (51) autour d'un axe transversal, en particulier orthogonal, audit plan de support (3) ou, en variante, de faire translater ledit organe de support (51') depuis une configuration rétractée par rapport audit plan de support (3) à une configuration extraite vers ledit plan de support (3).

10. Procédé selon l'une des revendications précédentes, **caractérisé en ce que** ladite étape c. d'actionnement de ladite unité de transfert (5, 5') dans ledit mouvement d'insertion afin de soulever ladite partie espacée (2b) desdits éléments (2) prévoit d'actionner un mouvement de translation le long d'une direction sensiblement verticale ou un mouvement de rotation autour d'un axe sensiblement horizontal dudit organe de support (51, 51') inséré sous lesdits éléments (2) à acheminer.

11. Procédé selon l'une quelconque des revendications précédentes, **caractérisé en ce que** ladite étape b. d'actionnement d'une unité de préhension (4) selon un mouvement de collecte prévoit la collecte d'au moins une partie desdits éléments (2) au niveau d'une partie de préhension (2a) centrale, ladite unité de préhension (4) étant agencée de manière centrale par rapport audit plan de support (3).

12. Procédé selon la revendication 11, **caractérisé en ce que** ladite étape c. d'actionnement d'une unité de transfert (5, 5') dans un mouvement d'insertion prévoit d'actionner successivement une pluralité de paires d'éléments de support (51, 51'), chaque paire étant opposée par chaque partie de ladite unité de préhension (4) située de manière centrale.

13. Procédé selon l'une quelconque des revendications précédentes, **caractérisé en ce que** ladite étape d. d'actionnement de ladite unité de préhension (4) dans un mouvement de dégagement est précédée de l'étape de comptage et de séparation d'un nombre déterminé (2") desdits éléments (2) d'un nombre excédentaire (2') au moyen d'une unité de comptage et de séparation (10) associée à ladite unité de préhension (4).

14. Appareil d'alimentation en éléments métalliques allongés, en particulier des profilés métalliques, comprenant un plan de support (3) pour fournir une pluralité desdits éléments (2) au repos agencés le long d'une direction longitudinale, une unité de préhension (4) comprenant une partie opérationnelle (42) capable d'agir sur une partie de préhension (2a) desdits éléments (2) par attraction magnétique, ladite unité de préhension (4) opérant au niveau dudit plan de support (3), afin de collecter au moins une partie desdits éléments (2) au niveau de ladite partie de préhension (2a) respective, et de soulever ladite partie desdits éléments (2) à partir dudit plan de support (3), une unité de transfert (5, 5') munie d'au moins un organe de support (51, 51') agencé le long de ladite direction longitudinale mobile par un mouvement d'insertion pour agir comme un support pour lesdits éléments (2) collectés, au niveau d'une partie espacée (2b) respective de ladite partie de préhension (2a), sur un plan de transfert (6) relevé par rapport audit plan de support (3), au niveau duquel lesdits éléments (2) collectés sont libérés au repos et par un mouvement de transfert, de manière à amener lesdits éléments (2) à rouler ou glisser ou à être déplacés sans rouler ou glisser, lesdits éléments (2) étant collectés dans une direction de transfert transversale, opposée audit plan de support (3), vers un poste de transfert adjacent audit plan de support (3), **caractérisé en ce que** ladite unité de préhension (4) est mobile par un mouvement de dégagement desdits éléments (2) collectés, positionnable dans une position inactive espacée dudit groupe de transfert (5, 5'), rétractable, en dessous dudit plan de transfert (6), et **en ce que** ladite unité de préhension (4) est interposée entre ledit plan de support (3) et ledit poste de transfert, de sorte que pendant ledit mouvement de transfert, lesdits éléments (2) collectés dépassent ladite unité de préhension (4) positionnée dans ladite position inactive.

15. Appareil selon la revendication 14, **caractérisé en ce que** dans ledit mouvement de préhension ledit organe de préhension (41) agit sur ladite partie de préhension (2a) depuis une position dans laquelle ledit organe de préhension (41) est agencé au-dessus de ladite partie de préhension (2a).

16. Appareil selon la revendication 14 ou 15, **caractérisé en ce que** ledit au moins un organe de support (51') de ladite unité de transfert (5') peut fonctionner dans ledit mouvement de transfert entre une configuration de support extraite vers ledit plan de support (3) et une configuration de transfert rétractée vers ledit poste de transfert, de manière à provoquer ledit déplacement desdits éléments (2) collectés sans rouler ou glisser.

17. Appareil selon la revendication 14 ou 15, **caractérisé en ce que** ladite unité de transfert (5) est oscillante selon ledit mouvement de transfert, autour d'un axe parallèle à ladite direction longitudinale, de manière à transporter lesdits éléments (2) collectés par roulement ou glissement le long de ladite direction de transfert.

18. Appareil selon l'une des revendications 14 à 17, **caractérisé en ce que** ledit au moins un organe de support (51') est constitué par une équerre.

19. Appareil selon la revendication 14 ou 15, **caractérisé en ce que**, selon ledit mouvement de dégagement, ladite unité de préhension (4) est orientable de sorte que ladite partie opérationnelle (42) soit agencée dans une direction transversale audit plan de transfert (6), et mobile le long de ladite direction transversale pour fournir un glissement relatif entre ladite partie opérationnelle (42) et ladite partie de préhension (2a), ladite unité de préhension (4) comprenant une structure de butée (46) pour détecter lesdits éléments (2) pendant ledit mouvement de dégagement.

20. Appareil selon l'une quelconque des revendications 14 à 15, **caractérisé en ce que** ladite unité de transfert (5) est rotative selon ledit mouvement d'insertion, autour d'un axe transversal, en particulier orthogonal, audit plan de support (3).

21. Appareil selon l'une quelconque des revendications 14 à 20, **caractérisé en ce que** ladite unité de préhension (4) est agencée de manière centrale par rapport audit plan de support (3).

22. Appareil selon la revendication 21, **caractérisé en ce qu'**il comprend une pluralité de paires d'éléments de support (51, 51'), chaque paire étant opposée par chaque partie de ladite unité de préhension (4) agencée de manière centrale.

23. Appareil selon l'une des revendications 14 à 22, **caractérisé en ce qu'**il comprend une unité de comptage et de séparation (10) associée à ladite unité de préhension (4), pour compter et séparer un nombre donné (2") égal à un nombre (2') desdits éléments (2) en excès.

24. Appareil selon l'une quelconque des revendications 14 à 23, **caractérisé en ce qu'**il comprend une unité de traitement configurée pour commander au moins l'un parmi ledit mouvement de collecte, ledit mouvement de dégagement, ledit mouvement d'insertion et ledit mouvement de transfert.

25. Programme informatique comprenant des instructions qui, lorsque le programme est exécuté par ladite unité de commande de l'appareil selon la revendication 24, permettent audit appareil de mettre en œuvre le procédé selon l'une des revendications 1 à 13.
